(19) **Europäisches Patentamt**
**European Patent Office**
**Office européen des brevets**

(11) **EP 3 506 149 B1**

(12) **EUROPEAN PATENT SPECIFICATION**

(45) Date of publication and mention
of the grant of the patent:
**08.01.2025 Bulletin 2025/02**

(21) Application number: **17382912.8**

(22) Date of filing: **27.12.2017**

(51) International Patent Classification (IPC):
*G06V 40/19* (2022.01)      *G06V 10/82* (2022.01)
*G06V 40/16* (2022.01)      *G06F 3/01* (2006.01)
*G06F 3/03* (2006.01)

(52) Cooperative Patent Classification (CPC):
**G06F 3/012; G06F 3/013; G06F 3/0304;**
**G06V 10/82; G06V 40/165; G06V 40/19;**
G06V 10/454

(54) **METHOD, SYSTEM AND COMPUTER PROGRAM PRODUCT FOR POINT OF GAZE ESTIMATION**

VERFAHREN, SYSTEM UND COMPUTERPROGRAMMPRODUKT ZUR ABSCHÄTZUNG DES
BLICKPUNKTS

PROCÉDÉ, SYSTÈME ET PRODUIT-PROGRAMME D'ORDINATEUR POUR L'ESTIMATION DE
POINT DE REGARD

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**03.07.2019 Bulletin 2019/27**

(73) Proprietor: **FUNDACION CENTRO DE**
**TECNOLOGIAS DE INTERACCION**
**VISUAL Y COMUNICACIONES VICOMTECH**
**20009 San Sebastian (ES)**

(72) Inventors:
• **UNZUETA IRURTIA, Luis**
**20009 San Sebastián (ES)**
• **GOENETXEA IMAZ, Jon**
**20009 San Sebastián (ES)**
• **ELORDI HIDALGO, Unai**
**20009 San Sebastián (ES)**
• **OTAEGUI MADURGA, Oihana**
**20009 San Sebastián (ES)**

(74) Representative: **Balder IP Law, S.L.**
**Paseo de la Castellana 93**
**5ª planta**
**28046 Madrid (ES)**

(56) References cited:
• **XUCONG ZHANG ET AL: "MPIIGaze: Real-World**
**Dataset and Deep Appearance-Based Gaze**
**Estimation", ARXIV.ORG, CORNELL**
**UNIVERSITY LIBRARY, 201 OLIN LIBRARY**
**CORNELL UNIVERSITY ITHACA, NY 14853, 24**
**November 2017 (2017-11-24), XP080839951**
• **UNZUETA LUIS ET AL: "Efficient generic face**
**model fitting to images and videos", IMAGE AND**
**VISION COMPUTING, vol. 32, no. 5, 1 May 2014**
**(2014-05-01), pages 321 - 334, XP028845847,**
**ISSN: 0262-8856, DOI: 10.1016/**
**J.IMAVIS.2014.02.006**
• **ANDREW T DUCHOWSKI ET AL: "Binocular eye**
**tracking in virtual reality for inspection training",**
**PROCEEDINGS EYE TRACKING RESEARCH &**
**APPLICATIONS SYMPOSIUM 2000, 8 November**
**2000 (2000-11-08), NEW YORK, NY : ACM, US,**
**pages 89 - 96, XP058268054, ISBN:**
**978-1-58113-280-9, DOI: 10.1145/355017.355031**
• **BERTHILSSON R: "Finding correspondences of**
**patches by means of affine transformations",**
**COMPUTER VISION, 1999. THE PROCEEDINGS**
**OF THE SEVENTH IEEE INTERNATION AL**
**CONFERENCE ON KERKYRA, vol. 2, 20**
**September 1999 (1999-09-20) - 27 September**
**1999 (1999-09-27), IEEE COMPUT. SOC,LOS**
**ALAMITOS, CA, USA,, pages 1117 - 1122,**
**XP010350527, ISBN: 978-0-7695-0164-2**

EP 3 506 149 B1

**Description**

**TECHNICAL FIELD**

The present invention relates to the field of methods and systems for the estimation of eye point of gaze of a user from images. In particular, it relates to methods and systems therefor, in which the images from which the estimation of eye point of gaze of a user is performed, are monocular images.

**STATE OF THE ART**

Conventional methods for estimating the eye gaze direction from monocular images can be categorized in two types of approaches: model-based and appearance based.

The model-based approach relies explicitly in 3D graphical models that represent the geometry of the eye (typically as spheres) which are fitted to the person's detected eye features in the image (typically, the iris and the eye corners). Thus, the fitted 3D model allows inferring the 3D eye gaze vector, which is then used to deduce where the person is looking at (e.g., a specific position in a screen in front of the person's face). For example, Strupczewski A. et al. have provided a revision of methods for estimating the eye gaze direction based on eye modelling (Strupczewski A. et al., "Geometric Eye Gaze Tracking", Proc. of the Conference on Computer Vision, Imaging and Computer Graphics Theory and Applications (VISIGRAPP), Vol. 3: VISAPP, pp. 446-457, 2016). Unzueta L. et al. have also proposed an "Efficient generic face model fitting to images and videos", Image and Vision Computing, vol. 32, n° 5, 2014-05-01, pages 321-334. These methods imply some drawbacks, such as: They require to precisely locate the iris of the eye in the image; this is often impossible, for example when the user's eyes are not wide open, which is the normal case. In order to estimate the eye gaze direction, they need the user's head coordinates system as reference. Therefore, the success of these methods is highly dependent on the precision with which the user's head coordinates system has been localized. Besides, although simple, they require an initialization scheme: the user needs to intentionally look at one or more points on a screen. Otherwise, eye vectors cannot be obtained with sufficient precision. In sum, since they are pure geometric methods, their precision is strongly dependent on the precision with which the center of the eyeball and the center of the pupil are estimated. However, common images do not enable to obtain this information with high precision.

On the contrary, the appearance-based approach establishes a direct relation between the person's eye appearance and the corresponding eye gaze data of interest (e.g., the 3D eye gaze vector) by applying machine learning techniques. Thus, a dataset of annotated images is used to train a regression model, which is then used to deduce where the person is looking at, when applied to the person's eye image, extracted from the image.

In the last few years, the appearance-based methods have been greatly benefited by the revolutionary results obtained by the emerging deep learning techniques in computer vision applications and have become the current state of the art in the field (Zhang X., et al., "Appearance-Based Gaze Estimation in the Wild." Proc. of the IEEE International Conference on Computer Vision and Pattern Recognition (CVPR), pp. 4511-4520, 2015; Krafka K. et al., "Eye Tracking for Everyone." Proc. of the IEEE Conference on Computer Vision and Pattern Recognition (CVPR), 2016; Zhang X. et al., "It's Written All Over Your Face: Full-Face Appearance-Based Gaze Estimation." CoRR abs/1611.08860, 2017). Deep learning techniques allow to generalize much better the learned relation between the eye appearance and the corresponding eye gaze data than alternative machine learning approaches (based on "handcrafted" image features and "shallow" layered learning architectures), when a huge dataset of annotated images is used for training. Typically, hundreds of thousands or even millions of samples are used, which may include real data (Zhang X. et al., 2015), photorealistic synthetic data (Wood, et al., "Rendering of Eyes for Eye-Shape Registration and Gaze Estimation." Proc. of the IEEE International Conference on Computer Vision (ICCV), 2015; Wood, et al., "Learning an Appearance-Based Gaze Estimator from One Million Synthesised Images." Proc. of the ACM Symposium on Eye Tracking Research & Applications, pp. 131-138, 2016) or even a mixture of both (Shrivastava, et al., "Learning from Simulated and Unsupervised Images through Adversarial Training." CoRR abs/1612.07828, 2016). This way, eye gaze direction estimation systems can obtain better accuracies with people whose appearance has not been included in the training of the regression model.

Nevertheless, despite these remarkable advances in the field, there is still a need for improvement, mainly because deploying this kind of systems in a general case (i.e., for different kind of environments and applications) is still an open issue. An effective eye gaze direction estimation system does not only require obtaining accurate eye gaze data from eye images, but it also requires applying properly the eye gaze data to the environment, so that it is possible to deduce where the person is looking at. Thus, the most recent approaches have simplified the use cases to some specific ones, where the kind of targets are pre-defined and implicitly included during the regression model's learning stage. These targets correspond to specific screens with predefined sizes and relations with respect to the camera and the person's face, where the learned eye gaze data related to the eye images are directly the 2D screen positions (Zhang, et al., 2015; Krafka, et al., 2016; Zhang, et al., "MPIIGaze: Real-World Dataset and Deep Apperance-Based Gaze Estimation". Cornell University Library 2017-11-24). Therefore, the learned regression models can be applied only to those same conditions, but not to other ones (e.g., different screen sizes, distances with respect to the person's face, camera characteristics, etc.). In other words, real-life applicability of these systems is very limited.

## DESCRIPTION OF THE INVENTION

The computer-implemented method for eye gaze direction estimation described in the present disclosure intends to solve the shortcomings of prior-art methods. The method of the present disclosure can effectively extend its applicability to different environmental conditions. The considered entities (such as person's face, targets if any, and imaging device) are reconstructed in a common virtual 3D space, which is used to estimate where the person is looking at, without necessarily requiring calibration data, e.g. any initialization procedures.

The method of the present disclosure estimates the direction of eye gaze of a user, from an image of the user taken by an imaging device (such as a camera). The image is a monocular image captured by a monocular imaging device, meaning that the image only provides basic information, such as RGB or greyscale values and resolution. In other words, the image does not provide additional information that binocular cameras may provide, such as 3D information (depth). The image may be a color image or a black-and-white image. The image used for the eye gaze estimation provides limited information about the imaging device used for capturing the image. This limited information is typically the resolution of the imaging device. The image may be extracted from a video comprising a plurality of images. Depending on the application and use of the method of the present disclosure, the image -or video from which images are extracted-, may be taken in real time (substantially at the moment of executing the method) by an imaging device, or may have been registered well in advance with respect to the execution of the method.

As will be explained in detail along this disclosure, any other information of the imaging device relevant for the estimation of eye gaze direction, such as the intrinsic parameters, is modelled in order to estimate, for example, the distance between the person in the image and any potential target. The imaging device is therefore modelled in order to have a virtual model thereof that may be integrated in a 3D reconstruction of a virtual space common to the user, imaging device and potential targets. The modelled imaging device also provides a fixed reference system within the space, required for establishing a relationship between the user and the imaging device.

In the context of the present disclosure, the "entities" to be considered by the method herein disclosed, are at least the imaging device (e.g. camera) with which the image(s) has(have) been taken, and the user (i.e. the person whose eye gaze direction is to be estimated). Other entities involved in the method are potential targets to which the user may be looking at. In this sense, the method of the present disclosure may be applied for identifying which object(s) a user is looking at and for how long the user is looking at a certain object.

In the context of the present disclosure, the term "target" refers to a specific interest area to which the user may be supposed to be looking at. The target or targets may be different depending on the application. Non-limiting examples of targets are: the screen of a mobile device or specific areas thereof; the screen of a TV set or different areas thereof; a display; a control panel of an industrial machine or specific areas thereof, such as a machine tool; different elements of vehicle to which the driver may be looking at, such as the dashboard, windscreen or rear-view mirrors of a vehicle; an advertising panel; and different areas configured to interact with a user of a smart sensorized house. Also other elements (persons, objects...) of interest within a scene, whose position with respect to the imaging device may be known, can be targets.

The virtual 3D space reconstruction is generated by combining a set of computer vision procedures in a specific manner and by considering a set of assumptions regarding the physical characteristics of the different components, which constitutes the principal factor to obtain the goal. Different computer vision procedures may be applied to fulfill each of the steps in the proposed method, as far as they provide the required output for each step. In embodiments of the invention, computer vision procedures that have a good balance between accuracy, robustness and efficiency are selected, so that they can be integrated also in embedded hardware systems with low computational capabilities.

Non-limiting examples of applications or use of the method of the present disclosure are: Assisting a driver by identifying in a vehicle the object to which the driver is looking at (dashboard, windscreen, inner rear-view mirror, left outer rear-view mirror, right outer rear-view mirror...) by taking images of the driver with a camera disposed within the vehicle (for example, in front of the driver); Identifying in a video the relationship between people and objects; Assessing the impact of publicity, for example in an internet session, identifying whether a publicity message shown on a display is of interest for the user, or when a person is watching TV, identifying whether an advertisement being shown is of interest for the user. There may also be applications not having a specific target, in which only a camera and a user may be involved, such as applications in which the goal is to estimate whether the user is looking at the floor, or to one side, or upwards, or the like, having the camera as reference point. The method of the present disclosure is also applicable to interactions not requiring real-time response, such as forensic analysis of crime scenes or obtaining automatic descriptions of images content, among others.

A first aspect of the invention relates to a computer-implemented method for estimating eye point of gaze of a user, according to claim 1.

In embodiments of the invention, the 3D face model fitted to the monocular image is obtained as follows: applying an appearance-based face region identification process to the monocular image for selecting a cropped face image; applying an appearance-based face landmark detection algorithm to the cropped face image for extracting a set of facial characterization landmarks representative of the shape of face elements, the face landmark detection algorithm being fed with a trained face landmark detection model; applying a model-based face model fitting algorithm for fitting a 3D deformable face model to the set of facial characterization landmarks, thus obtaining the values of the set of face model parameters that minimize the error between each facial characterization landmark and a corresponding projection in the 3D deformable face model.

In embodiments of the invention, the 3D deformable face model has 6 degrees of freedom corresponding to the XYZ position coordinates and roll-pitch-yaw rotation angles with respect to the imaging device coordinate system.

In embodiments of the invention, the appearance-based face region identification process comprises applying at least one of the following algorithms: a face detection algorithm or a face tracking algorithm.

In embodiments of the invention, said error is minimized by solving a non-linear optimization problem in which an objective function e is the minimum average distance between the detected facial landmarks and their corresponding vertex counterparts in the deformable 3D face model, said objective function e being:

$$e = \arg\min\frac{1}{n}\sum_{j=1}^{n}[d_j - p(f,w,h,\boldsymbol{t},\boldsymbol{r},\boldsymbol{s},\boldsymbol{a})_j]^2$$

where:

- $\boldsymbol{d_j} = \{d_1, d_2, d_3 ...\}$ are the detected 2D landmark positions (109),
- $p = \{p_1, p_2, p_3 ...\}$ are the 2D projections of the corresponding 3D deformable model vertices,
- f is the focal length of the imaging device from which the monocular image was obtained,
- w is the image pixel width,
- h is the image pixel height,
- t= $\{t_x, t_y, t_z\}$ are the XYZ positions of the face model with respect to the camera,
- r= $\{r_x, r_y, r_z\}$ are the roll-pitch-yaw rotation angles of the face model with respect to the camera,
- s= $\{s_1, s_2, s_3 ...\}$ are the shape-related deformation parameters,
- a= $\{a_1, a_2, a_3 ...\}$ are the action-related deformation parameters,
- n is the number of 2D landmark positions,
- e is the residual error.

In embodiments of the invention, applying an appearance-based face landmark detection algorithm to the cropped face image for extracting a set of facial characterization landmarks representative of the shape of face elements, is done as follows: holistically estimating model position and orientation parameters; holistically estimating shape parameters; and sequentially estimating each action parameter.

In embodiments of the invention, the imaging device from which the monocular image is obtained is modelled at least by means of its focal length, its image pixel width and its image pixel height.

In embodiments of the invention, unlike conventional methods, which use multimodal neural networks, that is to say, neural networks that take data from different types of sources (eye images and head orientation), the neural network used in the current method is unimodal because it only considers the normalized ocular image related to the gaze vector, and not the orientation of the head. In the current method, the orientation is used explicitly and uncoupled in the reconstruction of the virtual 3D world. This reduces the negative impact that a not sufficiently accurate estimation of the orientation of the head may have on the estimation of the gaze vector.

In embodiments of the invention, obtaining the intersection between the geometric mean 3D eye gaze vector and the geometry of the at least one target is done as follows: calculating the point of gaze for each target plane; applying a point-to-polygon strategy to select either a point of gaze that lies within any of the polygons that represent the at least one target or a point of gaze of the closest polygon.

In embodiments of the invention, transforming the normalized 3D gaze estimation vectors for the right and left eyes is done by removing the effect of the rotation angle θ that was used for the affine transformation applied to each normalized eye shape, like this:

$$\{g_l, g_r\} = \begin{pmatrix} -\cos(\theta) \cdot (\{g_l, g_r\}_{norm})_x + \sin(\theta) \cdot (\{g_l, g_r\}_{norm})_y \\ -\sin(\theta) \cdot (\{g_l, g_r\}_{norm})_x - \cos(\theta) \cdot (\{g_l, g_r\}_{norm})_y \\ (\{g_l, g_r\}_{norm})_z \end{pmatrix}$$

A second aspect of the invention relates to a system, according to claim 10, comprising at least one processor configured to perform the steps of the method of the first aspect of the invention.

A third aspect of the invention relates to a computer program product, according to claim 11, comprising computer program instructions which, when the program is executed by a computer, cause the computer to carry out the method of the first aspect of the invention.

A fourth aspect of the invention relates to a computer-readable storage medium, according to claim 12, comprising instructions which, when executed by a computer, cause the computer to carry out the method of the first aspect of the invention.

In sum, a method for estimating eye gaze direction from monocular images taken by a single imaging device has been proposed. The method provides a reconstruction of the 3D virtual space and relates the 2D projections with the reconstructed 3D virtual space has been proposed. The method does not require extra equipment, such as several imaging devices or depth sensors. On the contrary, the method only requires a single monocular imaging device that does not provide 3D data. Ideally, relating the 2D image projections with the reconstructed 3D space would require not only obtaining the person's 3D eye gaze vectors from the images, as disclosed for example by Strupczewski et al., 2016, but also the person's 3D eye positions, the surrounding potential targets' geometries in the same 3D space, the camera characteristics from which that space is observed and an additional calibration stage done by the user. However, in many applications it is not possible to obtain all these data. The present disclosure manages to perform such estimation from a simple monocular imaging device.

Besides, the method of the present disclosure does not use a 3D graphic model to represent the shape of the eye. On the contrary, a 3D graphic model is used to represent the face. The eyes are then positioned in 3D space in a global way, as if the ocular centers were positioned.

What is more, for the estimation of the normalized gaze vectors for left and right eyes, an appearance-based methodology using a deep neural network is contemplated The deep neural network is trained from a database of ocular images and its corresponding 3D look vectors with respect to the coordinate system located in the imaging device, and not in the head like in some conventional approaches. On the other hand, estimating the position of the iris in the image is not necessary. Therefore, the dependency of the current method on the accuracy in the estimation of the pose of the head is lower and the dependency of the current method on the accuracy in the estimation of the pose of the iris is null. This circumstance is relevant given that it makes the direction estimations achieved by the current method to be -in general- closer to the real one.

On the other hand, the complete processing of the system is more efficient than in conventional methods. Therefore, the current method can work more efficiently in a device (i.e. processor) with a more modest processing capacity (such as, but not limiting, mobile phones and tablets with ARM chips).

Additional advantages and features of the invention will become apparent from the detail description that follows and will be particularly pointed out in the appended claims.

## BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1A shows a block diagram of a method for estimating eye gaze direction, according to embodiments of the present disclosure. Figure 1B shows a flow chart of the method for estimating eye gaze direction, according to embodiment of the present invention.

Figure 2 shows in more detail the first block depicted in figure 1A.

Figure 3 shows an example of generic deformable 3D face model and some of its deformable parameters.

Figure 4 shows a flowchart of the method for adjusting a 3D face model to the user's face image, according to embodiments of the present disclosure.

Figure 5 shows a flowchart with the specific stages of the last block of figure 4.

Figure 6 shows a geometry of eye's key points in a normalized eye shape.

Figure 7 shows a flow chart of an appearance-based algorithm corresponding to the second block of figure 1A. It permits to automatically infer the normalized 3D gaze vector from the eye textures of the user.

Figure 8 shows examples of the distortion that happens in the normalized appearance of distant eyes in non-frontal faces, when the head's yaw angle is changed.

Figure 9 shows an eye image equalization algorithm according to embodiments of the present disclosure.

Figure 10 shows a flow chart of the algorithm corresponding to the third block of figure 1A, which is a target-related point of gaze estimation algorithm for automatically inferring the user's eye gaze with respect to the targets in the scene.

DESCRIPTION OF A WAY OF CARRYING OUT THE INVENTION

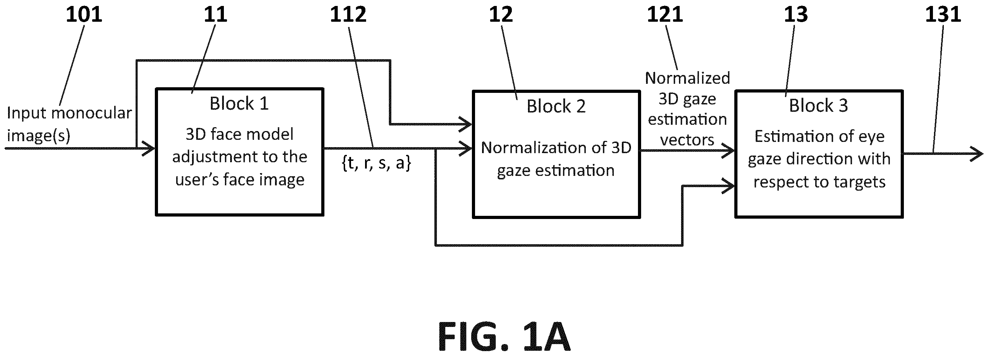

Figure 1A shows a block diagram of the method of the present disclosure. The method is applied to an image or, in general, to a sequence of images (input monocular image(s) 101 in figure 1A). Each image has been captured by a camera (not shown in the figure). The method may be executed substantially while the camera is registering images (or video) or a posteriori, that is to say, using registered images or video. Each input image 101 is a monocular image, that is to say, the main information it provides is the RGB values of the image (either color image or black-and-white one). In particular, it does not provide 3D information (depth) or other extra features, such as infrared information. The camera must have enough resolution in the ocular area so as to distinguish where the person in the image is looking at. For example, but not limiting, the camera should provide at least 40 pixels between an eye's left corner and the right corner of the same eye.

The diagram shown in figure 1A includes three main blocks: A first block (Block 1) 11 in which a 3D face model is adjusted to the user's face image. The input to this first block 11 is an input monocular image 101 or, in general, a sequence of monocular images $I_j$. The output of this first block 11 is a 3D face model 112 fitted to the user's face image 101. The 3D face model 112 is represented by the values taken by a set of parameters {t, r, s, a}, which will be explained in detail later. In the second block (Block 2) 12, from the 3D face model 112 fitted to the user's face image and from the user's face image 101, normalized 3D gaze vectors 121 of the user with respect to the camera viewpoint are obtained. Finally, in the third block (Block 3) 13, from the from the 3D face model 112 fitted to the user's face image and from the normalized 3D gaze vectors 121, the eye gaze direction is estimated with respect to the targets. The output of this third block 13 is the user's estimated point of gaze with respect to the targets in the scene.

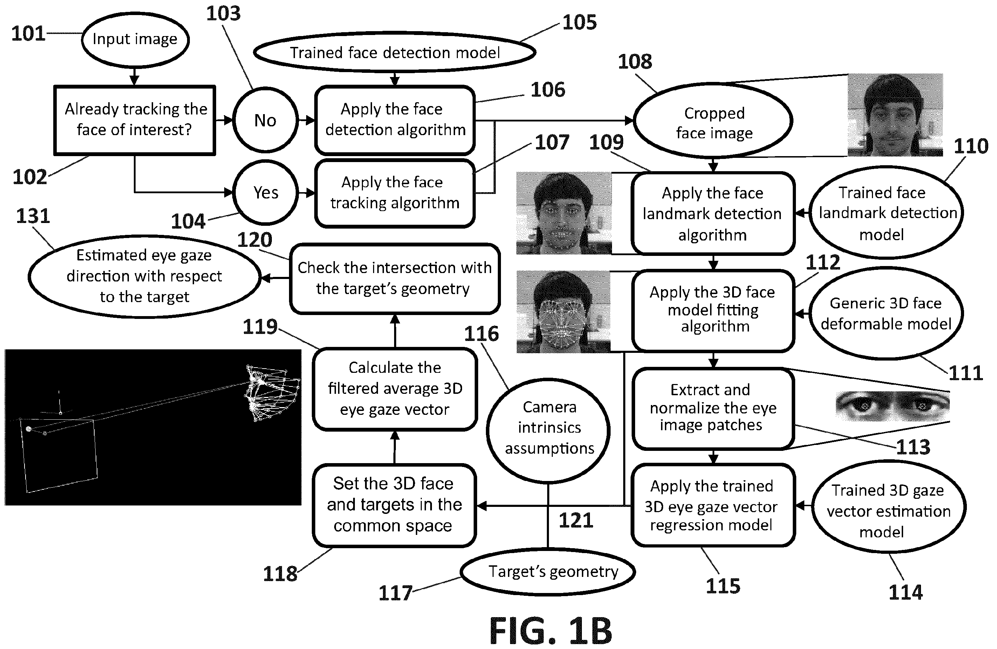

In figure 1B, a method for estimating eye gaze direction according to the present disclosure, corresponding to the main blocks 11-13 depicted in figure 1A, is represented in the form of a flow chart. Next, the three blocks 11, 12, 13 of figure 1A are described in detail. Block 11 in figure 1A corresponds to stages 101-112 in figure 1B; block 12 in figure 1A corresponds to stages 113-115 in figure 1B; and block 13 in figure 1A corresponds to stages 116-120 in figure 1B. When required, reference to blocks or stages of figure 1B will also be made.

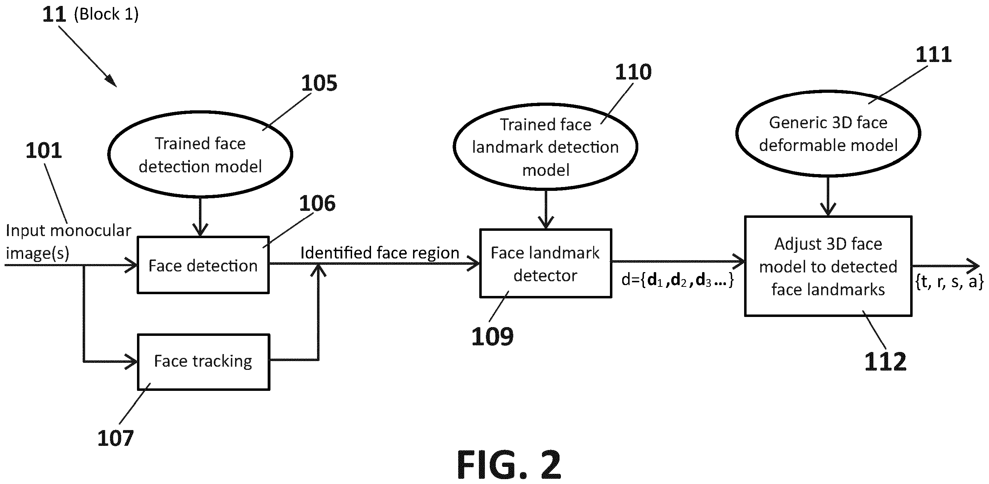

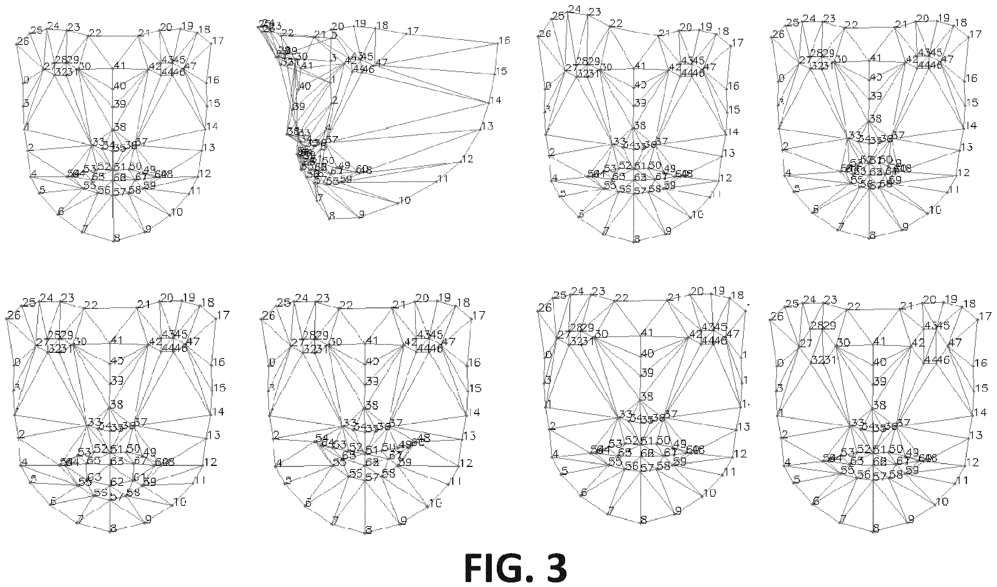

Figure 2 represents in more detail the first block (Block 1) 11 depicted in figure 1A, that is to say, the block for adjusting a 3D face model to the user's face image(s). Figure 3 shows an example of generic deformable 3D face model (111 in figure 2) that may be used in the method of the present disclosure. Any other deformable 3D face model may be used instead. It is recommended that the model 111 be simple, i.e. with a small set of vertices, triangles and deformation parameters, so that the computational time of the fitting procedure (112 in figure 2) can be reduced as much as possible, but with sufficient richness so that the model adjustments can fit the user's face with respect to face poses and facial expressions that users can show in the considered kind of images and applications. In other words, the model 111 preferably accomplishes a compromise between simplicity and richness.

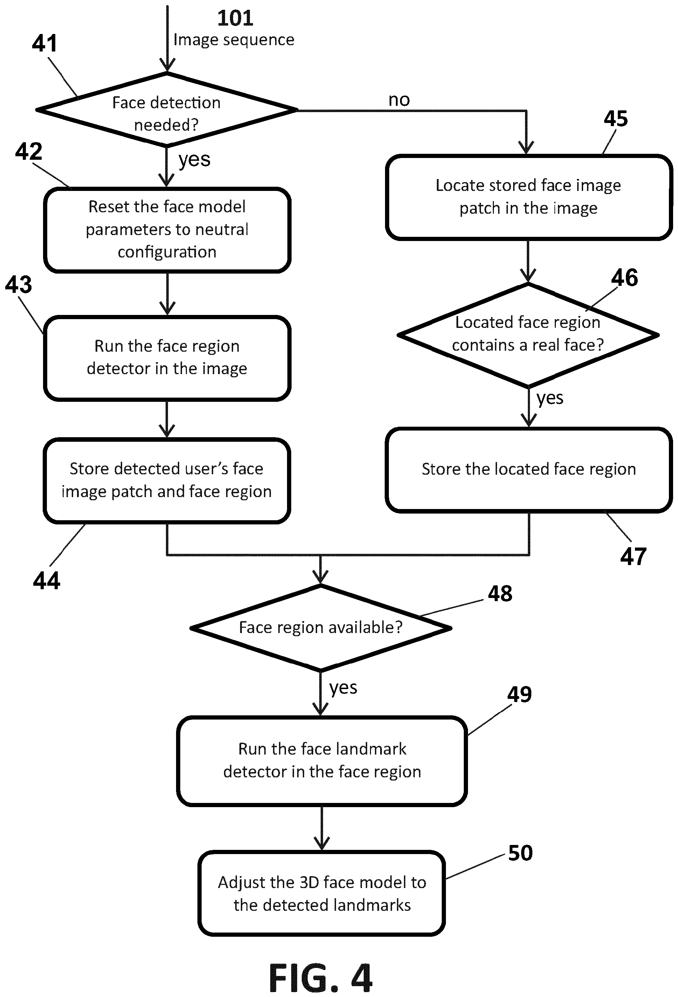

First block 11 is implemented by means of hybrid nested algorithms to automatically obtain the values of the face model parameters {t, r, s, a} based on the user's face in the image. The nested algorithms are hybrid because the face region identification procedure (blocks 106-108 in figure 1B; blocks 106-107 in figure 2) and the face landmark detection procedure (block 109 in figures 1B and 2) is appearance-based, while the remaining procedures are model-based. First, two stages are distinguished: (1) the initial face detection 106; and (2) the subsequent face tracking 107. This is explained in detail in relation to the upper part of the flow diagram of figure 4 (stages 41-47). Depending on the application, it may be required to detect all the faces present in each image. For example, when a single image 101 is obtained, the detection algorithm 106 is typically required, because the face or faces to be detected in the image do not necessarily correspond to people already identified. In another example, when a sequence of images 101 is obtained, image tracking algorithms may be used, preferably together with detection algorithms. Because the face (or faces) in the images may be faces which have been previously identified as the persons whose eye gaze direction is to be estimated, image tracking algorithms can be used. The current method permits to estimate the eye gaze direction of several people at the same time.

First, the algorithm analyzes whether the observed image requires face detection or not (in which case face tracking can be applied), i.e., whether the face in the image is new or not in the scene. This is relevant when the current method is applied to image sequences, as the time efficiency of computer vision tracking algorithms is typically much higher than those for face detection, and also because of memory constraints of the targeted hardware. The answer to the *"Face detection needed"* query 41 shown in figure 4 depends on the use case. For instance, in one application the processing of only a limited and controlled number of faces could be required, and therefore, a pre-defined buffer of maximum number of faces would be reserved in memory (e.g., only one). Hence, if one face is already being tracked, then the face detection procedure (stages 41-44 in figure 4) would be ignored until the tracking procedure (stages 45-47 in figure 4) loses that face. If, on the contrary, face detection is needed, then the face model parameters are reset to a neutral configuration (42 in figure 4), a face region detector is run in the image (43 in figure 4) and an image patch and face region of the detected user's face is stored (44 in figure 4). A neutral configuration is explained later, in relation to equation (1). The application of a face detection algorithm (106 in figure 1B) requires a conventional trained face detection model 105, which is out of the scope of the present invention.

At the output of the face detection/face tracking stage (106/107), a face region has been identified (answer to query 48). This region or rectangle represents a cropped face image (108 in figure 1B). In other words, after the application of the face detection algorithm 106 /tracking algorithm 107, all the faces shown in the image are identified (i.e. captured within or delimited by a rectangle) and a cropped face image 108 of the face of interest is obtained. Once the face of interest (cropped face image 108) has been identified from the input image 101, a face landmark detection algorithm (109 in figure 1B and 2; 49 in figure 4) is applied to the obtained cropped face image 108, for detecting the 2D face landmarks, also referred to as 2D landmark detected positions $d = \{d_1, d_2, d_3...\}$. The face landmark detection algorithm 109 permits to extract a set of facial characterization points or landmarks that identify the shape of face elements like left eye, right eye, left eyebrow, right eyebrow, nose, left nostril, right nostril, mouth, forehead, left cheek, right cheek, chin, face corners or limits, etc. For such detection, a trained face landmark detection model 110 is used. This model 110 is conventional and is out of the scope of the present disclosure. The output of the face landmark detection algorithm 109 is an image coordinates vector. This vector has the positions of characteristic facial landmarks from which control points of the 2D facial shape (the projection of the shape of face, in other words) will be obtained. Finally, once a set of facial characterization points is extracted by applying the face landmark detection algorithm 109, a 3D face model fitting algorithm 112 (50 in figure 4) is applied against a parametrized 3D face deformable model 111 for adjusting the 3D face deformable model 111 (for example, but without limitation, the one shown in figure 3) to the detected landmarks $d = \{d_1, d_2, d_3...\}$ in order to minimize the error between each point (each detected landmark) of the obtained set of facial characterization points and a corresponding point (projection) in the parametrized 3D face deformable model 111. In other words, the deformation parameters of the model 111 are adjusted in order to optimize (that is to say, minimize) the mentioned error. The result of this adjustment are the values of face model parameters {t, r, s, a}. At this stage, the facial appearance of the person is identified in the 3D world, thanks to the overlapping of the face texture on the adjusted 3D face model.

Regarding the 3D face model 111, the considered deformation parameters can be distinguished in two groups: those related to facial actions and those related to the user's shape. In embodiments of the invention, a hard constraint to the facial shape deformations through time is not applied, considering that, in theory, it is kept constant for a specific person, and that the facial shape deformations cannot be measured with complete certainty from any viewpoint. Besides, the 3D face deformable model has also 6 degrees of freedom that correspond to the XYZ position coordinates and roll-pitch-yaw rotation angles with respect to the camera coordinate system, which is assumed to be well-known and located at the center of the image, with zero depth. Besides, the camera from which the image is obtained is modelled by means of certain parameters, such as its focal length, its image pixel width and its image pixel height. Thus, the face adjustment procedure 112 requires solving a non-linear optimization problem (equation 1 below) where an objective function e is the minimum average distance between the detected facial landmarks $d = \{d_j\}$ (j=1, 2, 3...) obtained in block 109 (figures 1B and 2) and their corresponding vertex counterparts in the deformable 3D face model 111.

$$e = \arg \min \frac{1}{n} \sum_{j=1}^{n} [d_j - p(f, w, h, \boldsymbol{t}, \boldsymbol{r}, \boldsymbol{s}, \boldsymbol{a})_j]^2 \tag{1}$$

where:

- $d = \{d_1, d_2, d_3 ...\}$ are the detected 2D landmark positions obtained in block 109 .
- $p = \{p_1, p_2, p_3 ...\}$ are the 2D projections of the corresponding 3D deformable model vertices, p is a function that depends on the camera parameters (f, w, *h*) and on the parameters of the graphical object (*t,* r, s, a). Function **p** represents the 2D projections on a surface of vertices, which are 3D. The goal is to minimize the distance between the detected 2D landmark positions in the image and the vertices of the projections.
- *f* is the focal length of the camera from which the image was obtained.
- *w* is the image pixel width.
- *h* is the image pixel height.
- $\boldsymbol{t} = \{t_x, t_y, t_z\}$ are the XYZ positions of the face model with respect to the camera.
- $\boldsymbol{r} = \{r_x, r_y, r_z\}$ are the roll-pitch-yaw rotation angles of the face model with respect to the camera.

- **s**= {$s_1$, $s_2$, $s_3$ ...} are the shape-related deformation parameters.
- **a**= {$a_1$, $a_2$, $a_3$ ...} are the action-related deformation parameters.
- $n$ is the number of 2D landmark positions.
- e is the residual error.

The vertices of the 3D deformable model are those vertices of the model whose positioning is semantically equivalent to the detected landmarks. In the end, a graphic model is nothing more than a list of points (vertices), joined by straight lines in one way or another (usually forming triangles). In the current case, the model is deformable through a series of parameters (numbers), which if they are zero, do not deform the model, but if any of them has a value different from 0 then the positioning of some vertices varies depending on a vector of pre-established deformation multiplied by the value of that parameter value, which acts as a "weight". These deformation vectors are also designed according to concepts, such as facial actions, or specific forms of the person. For example, a parameter that represents the interocular distance will change the vertices in the vicinity of the eyes, maintaining the symmetry of the face.

The model may have more vertices than the landmarks detected. A semantic relationship must be established between vertices and landmarks in order to deform the model through landmarks. For example, the 2D landmark that represents the tip of the nose must be paired with the 3D vertex positioned on the tip of the nose of the 3D model.

The facial model and its adjustment are relatively complex. For example, the number of landmarks may be 68, because in the facial adjustment stage the deformability parameters of the 3D facial graphic object are adjusted (and for doing it, it is better to use more landmarks). Consequently, the achieved estimation of the 3D positions of the eye centers is much closer to the real one than in conventional methods.

Thus, the objective function is parameterized with camera parameters {$f$, w, $h$} and face model parameters {t, r, s, a}. Any conventional camera model may be adopted. As a matter of example, but without limitation, the pinhole camera model [Hartley and Zisserman, 2003] is adopted, without considering lens distortion, as it provides a good balance between simplicity and realism for obtaining perspective projections, for most common cases. In practice, the camera parameters {$f$, w, $h$} are assumed to be known beforehand and constant in time. Hence, the optimization procedure obtains those values of face model parameters {t, r, s, a} that minimize the objective function e. As a result of this adjustment, the textures of the user's face elements under control can be obtained, including the eyes, for their processing in the following block (block 12 in figure 1). In other words, key parts of the image have been identified (for example eyes, nose, etc.) and they are aligned with the graphical object (the graphical object being the deformable graphical model representing the face).

It is important to note that the heterogeneous nature of the face model parameters needs to be set under control during the optimization procedure, i.e., the range of possible values for t, r, s and a can be significantly different one to each other if no explicit normalization is applied. Therefore, in embodiments of the invention, a "neutral configuration" is established. A non-limiting example of neutral configuration is a configuration in which the face is expressionless, looking at the front and located at the central region of the image, at a distance from the camera viewpoint in which the face boundaries cover about one quarter of the shortest image size (width or height). For the optimization, the face parameters are normalized so that in the neutral configuration they all have zero value and the range that each one covers (e.g., the translation in X direction, a facial action or shape deformation from one extreme to the other, etc.) lies in the same order of values.

The algorithm corresponding to the first block 11 (figure 2) and schematized in the flow chart of figure 4, is as follows: Considering in general that the input 101 is formed by an image sequence I (that may be a single image or video comprising a plurality of images or frames), for each $I_j$ e I, wherein j is the frame number:

If face detection is need (stage 41), then the face model parameters of the graphical model are reset to a neutral configuration (stage 42) and a search of a face region in the image j is performed (stage 43). A patch and a face region (block 108 in figure 1B) of the detected user's face are stored (stage 44). In other words, the stored image corresponds to the image which is within the patch.

If, on the contrary, face detection is not needed, because a patch representative of the user's face is already stored, then:

pattern matching is applied in order to identify an already stored face image patch in the image j (stage 45) and

it is verified (stage 46) whether the identified patch corresponds to a real face. This is done via pattern classification. In other words, every time "something" (apparently a face) is detected in an image, a patch is stored. Therefore, when no face detection is needed, the already stored patches are used in order to associate the current image j with a stored patch.

And if the identified face region contains a real face, then the identified face region is stored (stage 47). The identified face region is represented as a rectangle defined by its position x,y and its width and height. This rectangle will be later used in order to detect landmarks.

Next, if a face region is available (stage 48), then an algorithm for detecting the face landmark is run (stage 49) (block 109 in figure 1B) and an algorithm is applied (stage 50) (block 112 in figure 1B) in order to fit or adjust a 3D face model (for example the one shown in figure 3) to the detected landmarks. Optionally, the parameters {t, r, s, a} may be filtered with an appropriate approach for face movements (not shown in figure 4).

Depending on the application, it may be required -or preferred- to detect all the faces, in which case the face detection algorithm (stages 41-44) must be always applied (that is to say, applied for every new image or frame). If, however, for example only one face needs to be identified, it is possible to combine detection functions with tracking functions, in order to reduce the required computation capacity.

The algorithm schematized in figure 4 can be summarized as follows, in which additional inputs to the algorithm are trained face detection model 105, trained face landmark detection model 110 and generic 3D face deformable model 111. These models are implemented as neural networks, preferably deep neural networks.

---

**Algorithm 1:** Hybrid face model detection-tracking fitting algorithm

**Input:** *The image sequence I*

**Output:** *The face model parameters {t, r, s, a} that overlap the model to the user's face, throughout I*

---

1: **For each** $I_j \in I$ **do**

2:      **if** *Face detection needed* **then**

3:          Reset the face model parameters of the graphical model to the neutral configuration

4:          Run the face region detector in the image

5:          Store the detected user's face image patch and face region

6:      **else**

7:          Locate a stored face image patch in the image (via pattern matching)

8:          Verify that the located patch corresponds to a real face (via pattern classification)

9:          **if** *Located face region contains a real face* **then**

10:            Store the located face region

11:          **end**

13:      **if** *Face region available* **then**

14:          Run the face landmark detector in the face region

15:          Adjust the 3D face model to the detected landmarks *(Algorithm 2)* $\rightarrow$ $\{t, r, s, a\}_j$

16:      **end**

17: **end**

18: (Optional) Filter *{t, r, s, a}* with an appropriate approach for face movements

---

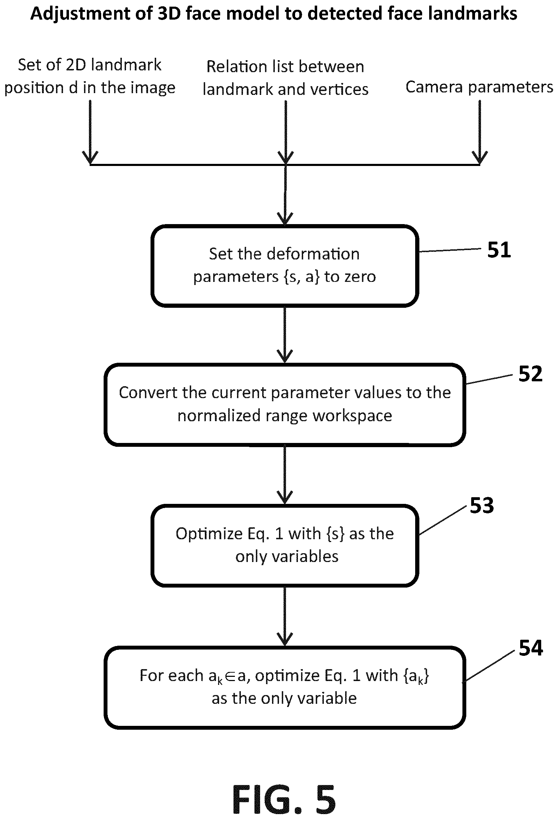

The algorithm for adjusting a 3D face model to the detected landmarks, applied at stage 50 in figure 4 (stage 112 in figures 1B and 2), is explained in detail in figure 5 (it is also referred to as Algorithm 2 in Algorithm 1 listed above). The inputs to this algorithm are: a set of 2D landmark positions $d = \{d_1, d_2, d_3 ...\}$ in the image; a relation list between landmarks and vertices (this relation is predefined and indicates which landmarks correspond to vertices in the graphical object); a generic 3D face deformable model 111; and the camera parameters, which are also known (or assumed to be known). The face model adjustment is carried out following a three-stage procedure, in which the first stage (block 51 in figure 5) corresponds to the overall holistic estimation of the model position (t) and orientation (r) parameters, the second stage (block 53 in figure 5) corresponds to the holistic estimation of the shape parameters (s) and the third stage (block 54 in figure 5) corresponds to the sequential estimation of each action parameter (a). After the holistic estimation of the model position (t) and orientation (r) parameters, the current parameter values are preferably converted to the normalized range workspace (block 52 in figure 5). If a face has been detected (blocks 41-44 in figure 4), then the current parameter values are those of the neutral configuration (block 42 in figure 4). If face tracking is being performed instead (blocks 45-47 in figure 4), then the current parameter values are those of the previous configuration. As a matter of example, but without limitation, for the first stage 51 the Levenberg-Marquardt algorithm [Levenberg, "A Method for the Solution of Certain Non-Linear Problems in Least Squares." Quarterly of Applied Mathematics, 2 (1944), pp. 164-168; Marquardt, "An Algorithm for Least-Squares Estimation of Nonlinear Parameters." SIAM Journal on Applied Mathematics, 11 (2) (1963), pp. 431-441] may be used, due to its high efficiency and sufficient accuracy for this case, while for the other two stages 53, 54, BFGS [Broyden, "The Convergence of a Class of Double Rank Minimization Algorithms: 2. The New algorithm." J. Inst. Math. Appl., 6 (1970), pp. 222-231; Fletcher, "A New Approach to Variable Metric Algorithms." Computer J., 13 (1970), pp. 317-322; Goldfarb, "A Family of Variable Metric Methods Derived by Variational Means." Math. Comp., 24 (1970), pp. 23-26; and Shanno, "Conditioning of Quasi-Newton Methods for Function Minimization." Math. Comp., 24 (1970), pp. 647-650] may be used, due to its more refined results in those cases. In order to avoid numerical instabilities, the shape and action values are preferably initialized with zero values, but the position and orientation values are preferably kept and updated from frame to frame while tracking. In embodiments of the invention, a hard constraint to the facial shape deformations through time is not applied, because, in theory, it should keep constant for a specific person, and because facial shape deformations cannot be measured with complete certainty from any viewpoint. As shown in Algorithm 1 already listed, the obtained parameter values may optionally be filtered by taking into account their frame-to-frame variation and an appropriate filtering method for face movements.

The algorithm schematized in figure 5 can be listed as follows:

---

**Algorithm 2:** Three-stage face model adjustment algorithm

---

**Input:**

- *Set of 2D landmark positions d in the image*
- *The relation list between the landmark and vertices*
- *The camera parameters {f, w, h}*

**Output:** *The face model parameters {t, r, s, a} that overlap the model to the user's face*

---

1: Set the deformation parameters $\{s, a\}$ to zero

2: Convert the current parameter values to the normalized range workspace

3: Optimize, using for example the Levenberg-Marquardt algorithm, Eq. 1 with $\{t, r\}$ as the only variables

4: Optimize, using for example the BFGS algorithm, Eq. 1 with $\{s\}$ as the only variables

5: **For each** $a_k \in a$ **do**

6:      Optimize, using for example the BFGS algorithm, Eq. 1 with $\{a_k\}$ as the only variable

7: **end**

The 3D face model fitted to the user's face image 101 and represented by parameters {t, r, s, a} 112, has already been obtained (block 11 of figure 1). The result of this stage 112 is the geometry in the 3D space of the facial shape of the person in the image. Because the purpose is to estimate the eye gaze direction, the information of interest of said geometry of the facial shape is the 3D positioning of the eyes and patches of eye images, in order to be able to apply an eye gaze direction estimation technique. Now, normalized 3D gaze vectors 121 of the user with respect to the camera viewpoint need to be obtained (block 12 of figure 1). This is done in two main stages (113 & 115 in figure 1B). First, eye image patches of the person are extracted and normalized 113 (figure 1B). In particular, two eye image patches are extracted: a left-eye image patch and a right-eye image patch. Each patch is an image represented by a matrix. The result of this stage 113 is, for each eye, the eye image region transformed to a normalized space. As a matter of example, for each patch (left patch and right patch), the normalized matrix has fixed image size, fixed left and right corners for each eye, and/or the intensity values for the pixels are within a fixed range. Second, a 3D eye gaze vector regression model is applied 115 to each normalized matrix. This is explained next.

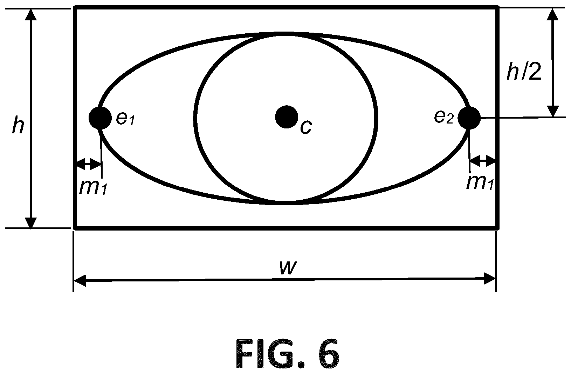

The inputs to this block 12 are: the output of block 11, that is to say, the values of the face model parameters $\{t, r, s, a\}$ that minimize the distance between the detected facial landmarks $d = \{d_j\}$ (j=1, 2, 3...) obtained in block 109 and their corresponding vertex counterparts in the deformable 3D face model, throughout I; the considered input image 101 (image sequence in general), which is required for example to extract the eye texture in a normalized way, that is to say, normalized according to the shape and intensity (pixel illumination) of the image; 2D left $\{e_1, e_2\}_l$ and right $\{e_1, e_2\}_r$ eye corner landmark positions, throughout I, already detected and a pre-trained 3D gaze vector estimation model (block 114 in figure 1B) for regressing 3D gazes from normalized eye images. The output 121 of block 12 in figures 1A-1B is the normalized estimated 3D gaze vectors, for each eye, of the user with respect to the camera viewpoint, throughout I $\{g_l, g_r\}_{norm}$. Regarding the 2D left $\{e_1, e_2\}_l$ and right $\{e_1, e_2\}_r$ eye corner landmark positions, figure 6 represents a geometry of eye's key points in a normalized eye shape: w and h are respectively the image pixel width and the image pixel height and have already been predefined. In other words, a trained 3D eye gaze vector regression model 114 has been applied 115 to the normalized eye image patches obtained in the previous stage 113 in order to extract 3D vectors of the eye gaze. In embodiments of the invention, the trained 3D eye gaze vector regression model 114 is a neural network. The neural network is a deep neural network. The neural network has a set of parameters (in the case of a deep neural network, it has a very large number of parameters) that allow to infer a response (the desired 3D vector) from a stimulus (each normalized eye image patch). These parameters have to be previously trained from data bases of images annotated with the corresponding answers (in the case of deep neural networks, with a great deal of answers). Then, when the neural network is fed with an unknown image (eye image patch obtained in stage 113), the neural network, based on what it has "learned" during a training stage, which has generated a model (trained 3D gaze vector estimation model 114 in figure 1B), responds with a result (the 3D vector corresponding to that eye image patch). A deep neural network has been trained with a geometry of the eyes (for example the one shown in figure 6), assuming that each eye is centered ("c" is thus estimated). The deep neural network is shown in figure 1B as a trained 3D gaze vector estimation model 114. In other words, in order to extract a 3D vector from each normalized eye image patch (a 3D vector represents the eye gaze direction), the patches are inserted in a trained neural network. For each patch, a 3D vector is thus obtained. In embodiments of the invention, estimation of the eye gaze direction is improved by combining the two 3D vectors of respective eyes.

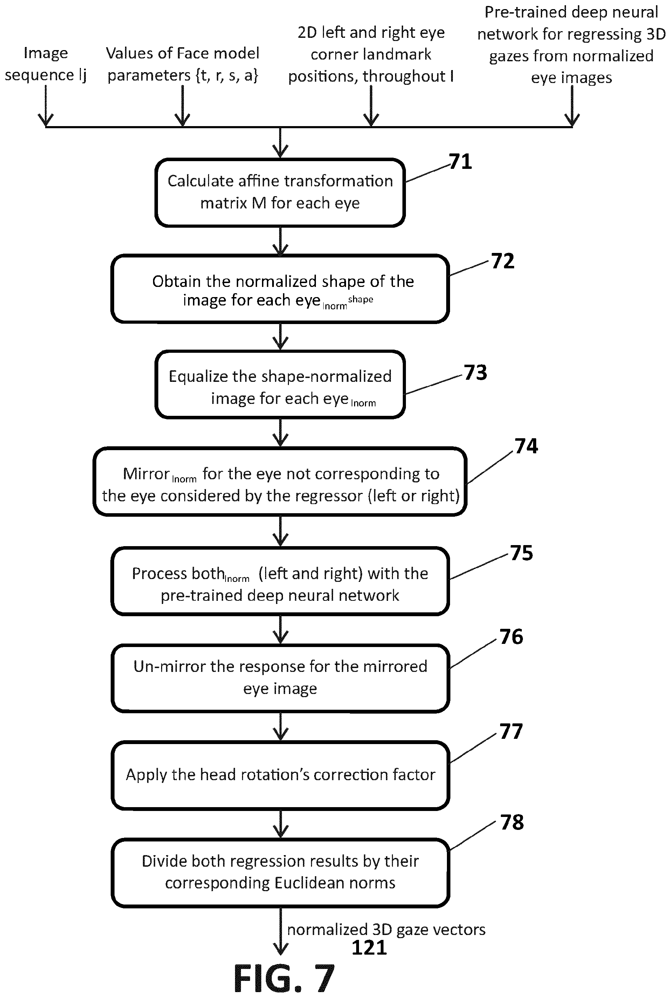

Figure 7 shows a flow chart of the algorithm corresponding to the second block 12 (figure 1A). It is an appearance-based algorithm, which permits to automatically infer the normalized 3D gaze vector 121 from the eye textures of the user. The inputs to the algorithm are: the image sequence I; 2D left $\{e_1, e_2\}$, and right $\{e_1, e_2\}_r$ eye corner landmark positions, throughout I; the adjusted face model geometry and parameters, throughout I; and the pre-trained deep neural network for regressing 3D gazes from normalized eye images. The output of the algorithm is the user's normalized left and right eye gaze vectors estimation $\{g_l, g_r\}_{norm}$, throughout I. The normalized image patches of both eyes need to be extracted (113 in figure 1B). The normalization is made by aligning the eye textures in a pre-defined shape and preferably by also equalizing the histogram, so that the image brightness is normalized, and its contrast increased. The shape normalization is solved by applying an affine warping transformation (using affine transformation matrix M) based on a set of key points of the eye (both eye corners $e_1$ $e_2$), obtained from the face landmarks detected previously, so that they fit normalized positions, as shown in figure 6.

The algorithm is as follows: For each $I_j \in I$, do:

Calculate affine transformation matrix M for each eye (see Eq. 2);

Obtain $I_{norm}^{shape}$ for each eye (see Eq. 3);

Obtain $I_{norm}$ for each eye (see Algorithm 4);

Mirror $I_{norm}$ for the eye not corresponding to that considered by the regressor (left or right);

Process both $I_{norm}$ with the pre-trained deep neural network;

Un-mirror the response for the mirrored eye image→ $(\{g_l, g_r\}_{norm}^{regression})_j$ ;

Apply the head rotation's correction factor (Eq. 4) → $(\{g_l, g_r\}_{norm}^{corrected})_j$ ;

Divide both regression results by their corresponding Euclidean norms→ $(\{g_l, g_r\}{norm})_j$

The affine transformation matrix M is calculated as follows (stage 71 of figure 7):

$$\begin{bmatrix} \alpha & \beta & (1-\alpha) \cdot c_x - \beta \cdot c_y \\ -\beta & \alpha & \beta \cdot c_x + (1-\alpha) \cdot c_y \end{bmatrix} \qquad (2)$$

where:

- $\alpha = s \cdot \cos(\theta)$
- $\beta = s \cdot \sin(\theta)$
- $s = (w - 2 \cdot m_1)$ (see figure 6 for the definitions of w and $m_1$)
- $\theta$ refers to the horizontal rotation angle of the line that connects both eye corners, that can be calculated by trigonometry.
- $\{c_x, c_y\}$ are the image coordinates of the mean value between corners of an eye .

Then, the source image $I_{input}$ is transformed, that is to say, normalized in shape, using the matrix M, as follows.

$$I_{norm}^{shape}(x, y) = I_{input}(M_{11}x + M_{12}y + M_{13}, M_{21}x + M_{22}y + M_{23}) \qquad (3)$$

wherein in $M_{rq}$, r denotes the row and q denotes the column, r being 1 or 2 and c being, 1, 2, or 3.

In embodiments of the invention, in order to minimize the required memory and space, the inference of both eye gaze vectors (left eye and right eye) is obtained by the same regression model trained (block 114 in figure 1B) only with appearances and the corresponding gaze vectors of one of the eyes (e.g., the right eye). Therefore, the other normalized eye image needs to be mirrored before it is processed by the regressor (trained regression model 114). This regressor 114 corresponds to a deep neural network trained with an annotated set of normalized eye images, in which the annotation corresponds to the corresponding normalized 3D eye gaze vector, i.e., three floating point numbers representing the XYZ gaze direction with respect to a normalized camera viewpoint, as a unit vector. Here, the term "normalized camera viewpoint" refers to a viewpoint from which the eye shape is observed as shown in figure 6, i.e., with the eye corners $e_1$, $e_2$ in fixed positions of the normalized image. Different kind of deep neural networks can be employed for this purpose, i.e., with different number, kind and configuration of layers (e.g., inspired in LeNet [LeCun, "Gradient-Based Learning Applied to Document Recognition." Proceedings of the IEEE, 1998], VGG [Simonyan and Zisserman, "Very Deep Convolutional Networks for Large-Scale Image Recognition." CoRR abs/1409.1556, 2014], etc.). In runtime, this preferably deep neural network processes the incoming normalized eye image patch and infers a vector of 3 floating point numbers associated with the gaze direction. In the case of the image that has been previously mirrored, its obtained result needs now to be un-mirrored (just by changing the sign of the first number). In the trained regression model 114, either synthetic images, or real images, or a combination of synthetic and real images, may be used.

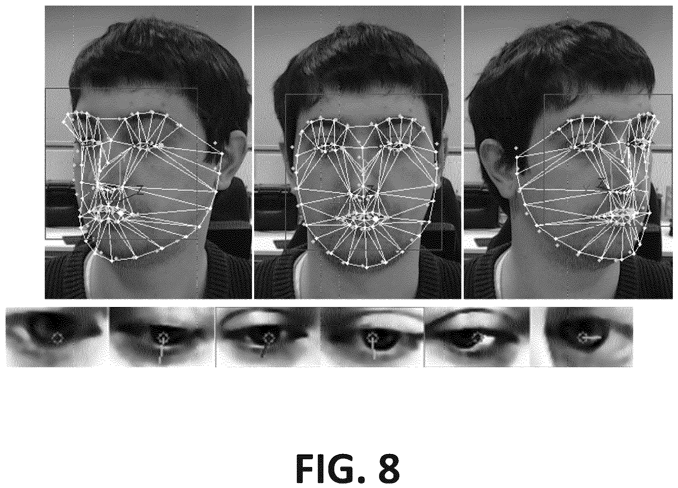

It must be noted that the applied eye shape normalization procedure usually results in distorted images; normally, the further the user's face is with respect to frontal viewpoints, i.e., the most distant eye's appearance may look, normally, the more distorted the images become. As a matter of example, figure 8 shows three examples of the distortion that happens in the normalized appearance of distant eyes in non-frontal faces, when the head's yaw angle is changed. The red rectangle represents the output of the face detection algorithm, that is to say, the detected face region, represented by a rectangle in image coordinates (for example, left top corner position, width and height). The green points are the face landmarks (d1, d2, d3...) detected by the face landmark detection algorithm. The white points, connected by white lines, are the vertices of the 3D facial model and its triangles, which define the 3D model. As can be observed, the green points do not match exactly the white ones because the deformability of the graphical object is not perfect. At most, e is minimized in block 11 (figure 1A). Consequently, this distortion may affect in stability of the estimated gaze for different yaw rotation angles of the head. A similar instability may also happen for different pitch angles, but in a lower degree.

In order to reduce this effect, the vectors obtained in the previous step $(\{g_l, g_r\}_{norm}^{regression})$ are corrected by a factor proportional to the head's pitch and yaw rotation angles, as follows:

$$\{g_l, g_r\}_{norm}^{corrected} = \{g_l, g_r\}_{norm}^{regression} + \begin{pmatrix} K_y \cdot (r_y - r_{y0}) \\ K_x \cdot (r_x - r_{x0}) \\ 0 \end{pmatrix} \qquad (4)$$

where:

- $r_{x0}$ is the reference pitch angle.
- $r_{y0}$ is the reference yaw angle.
- $K_x$ is the proportionality constant for the pitch angle.
- $K_y$ is the proportionality constant for the yaw angle.

The values of these parameters are experimentally determined, depending on the final application. For instance, the reference pitch and yaw angles could be the average values from those observed during the image sequence, while the user's head poses are closer to frontal viewpoints, while the proportionality constants could be determined based on the observations of the gaze stability while the user is moving the head, but maintaining the point of gaze.

Finally, each vector is divided by the Euclidean norm, so that to assure that the resulting vectors have unit norm, and this way both normalized gaze vectors are obtained.

The algorithm of the flow chart of figure 7 can be listed as follows:

---

**Algorithm 3:** Normalized left and right eye gaze vectors estimation algorithm

---

**Input:**

- *The image sequence I*

- *2D left $\{e_1, e_2\}_l$ and right $\{e_1, e_2\}_r$ eye corner landmark positions, throughout I*

- *The adjusted face model geometry and parameters, throughout I*

- *The pre-trained deep neural network for regressing 3D gazes from normalized eye images*

**Output:** *The user's normalized left and right eye gaze vectors estimation $\{g_l, g_r\}_{norm}$, throughout I*

---

1: **For each** $I_j \in I$ **do**

2:      Calculate M for each eye (Eq. 2)

3:      Obtain $I_{norm}^{shape}$ for each eye (Eq. 3)

4:      Obtain $I_{norm}$ for each eye *(Algorithm 4)*

5:      Mirror $I_{norm}$ for the eye not corresponding to that considered by the regressor (left or right)

6:      Process both $I_{norm}$ with the pre-trained deep neural network

7:      Un-mirror the response for the mirrored eye image$\rightarrow (\{g_l, g_r\}_{norm}^{regression})_j$

8:      Apply the head rotation's correction factor (Eq. 4) $\rightarrow (\{g_l, g_r\}_{norm}^{corrected})_j$

9:      Divide both regression results by their corresponding Euclidean norms $\rightarrow (\{g_l, g_r\}_{norm})_j$

10: **end**

---

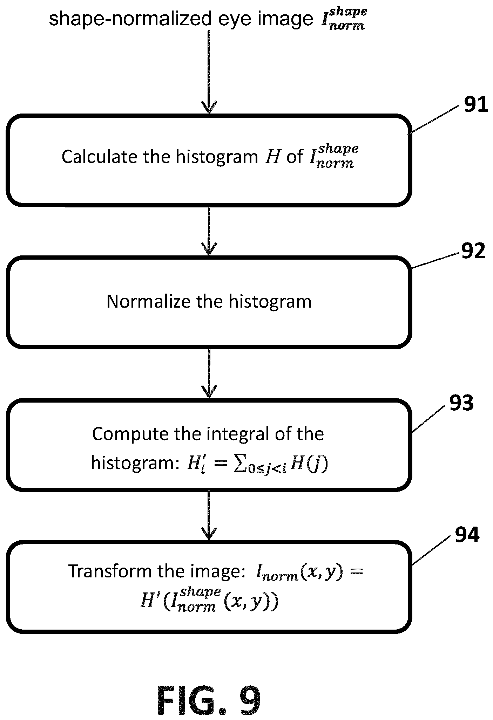

In embodiments of the invention, the eye image equalization algorithm (block 73 in figure 7) may be implemented as described next in relation to figure 9. The input to this algorithm is the shape-normalized eye image $I_{norm}^{shape}$. For example, but not in a limiting way, the shape-normalized eye image may be an 8-bit single channel shape-normalized eye image. The output of this algorithm is a normalized eye image $I_{norm}$. First, the histogram H of the shape-normalized eye image is calculated (stage 91). Then, the histogram is normalized so that the sum of histogram bins is 255 (stage 92). Then, the integral of the normalized histogram is computed: $H'_i = \sum_{0 \leq j < i} H(j)$. Finally, transform the image using H' as a look-up table: $I_{norm}(x, y) = H'(I_{norm}^{shape}(x, y))$.

The algorithm of the flow chart of figure 9 can be listed as follows:

---

**Algorithm 4:** Eye image equalization algorithm

---

**Input:** *8-bit single channel shape-normalized eye image $I_{norm}^{shape}$*

**Output:** *Normalized eye image $I_{norm}$*

---

1: Calculate the histogram $H$ of $I_{norm}^{shape}$

2: Normalize the histogram so that the sum of histogram bins is 255.

3: Compute the integral of the histogram: $H_i' = \sum_{0 \le j < i} H(j)$

4: Transform the image using $H'$ as a look-up table: $I_{norm}(x, y) = H'(I_{norm}^{shape}(x, y))$

---

The normalized 3D gaze vectors (for left and right eyes) 121 (figures 1A-1B) of the user with respect to the camera viewpoint have already been obtained (block 12 of figure 1A) from each normalized eye image patches (left-eye patch and right-eye patch). It is remarkable that these 3D eye gaze vectors have been obtained without any previous calibration e.g. without any initialization procedures. This is especially important in applications requiring real-time monitoring of the eye gaze, such as automotive applications. Finally, the eye gaze direction needs to be estimated with respect to the targets (block 13 of figure 1A). In other words, the 3D eye gaze vector already obtained must be related with the environment. This is explained next. In the present disclosure, a virtual 3D modelling between the target (i.e. screen) and the person is performed. In an ideal situation, in which information such as the person's 3D eye positions, the surrounding potential targets' geometries in the same 3D space or the camera characteristics was known, and calibration was performed, a real (rather than virtual) 3D modelling between the target and the person could be performed. However, in most applications it is not possible to obtain all these data, or at least it is impossible to obtain them quick enough so as to execute the estimation method efficiently. So, the considered entities (person's face, targets, camera) are reconstructed in a common virtual 3D space, which is used to estimate where the person is looking at, without requiring calibration data. This virtual 3D space reconstruction is generated by combining a set of computer vision procedures in a specific manner, as described next, and by considering a set of assumptions regarding the physical characteristics of the different components. In order to perform such 3D modelling, the target's geometry (117 in figure 1B) and camera intrinsic assumptions (116 in figure 1B) are used. The 3D modelling is virtual (rather than real) because the characteristics of the camera or user measurements, such as interocular distance, are not known. So, from each 3D eye gaze vector (obtained in stage 115) and from the target's geometry 117 and camera intrinsic assumptions 116, all the scene components (face, 3D eye gaze vectors, camera and possible targets) are set in a common 3D space (stage 118). In other words, there is a need to establish, for example, that the 3D eye gaze vectors leave the eyes in the image, or that the 3D eye gaze vectors reach (end at) one target among different potential targets. A filtered average 3D eye gaze vector is then calculated (stage 119). Finally, the intersection between the filtered average 3D eye gaze vector and the target's geometry is checked (stage 120). This checking provides the estimated eye gaze direction with respect to the target 131.

The inputs to this block 13 (figure 1A) are the outputs of blocks 11 and 12, that is to say: the values of the face model parameters {t, r, s, a} that minimize the distance between the detected facial landmarks d = {d$_j$} (j=1, 2, 3...) obtained in block 109 of figures 1B and 2 and their corresponding vertex counterparts in the deformable 3D face model 111, throughout I (see figures 1B and 2); and the normalized estimated 3D gaze vectors 121, for each eye, of the user with respect to the camera viewpoint, throughout I {$g_l$, $g_r$}$_{norm}$ (see figures 1A-1B and 7). The output 131 of block 13 in figures 1A-1B is the user's estimated point of gaze with respect to the targets in the scene.

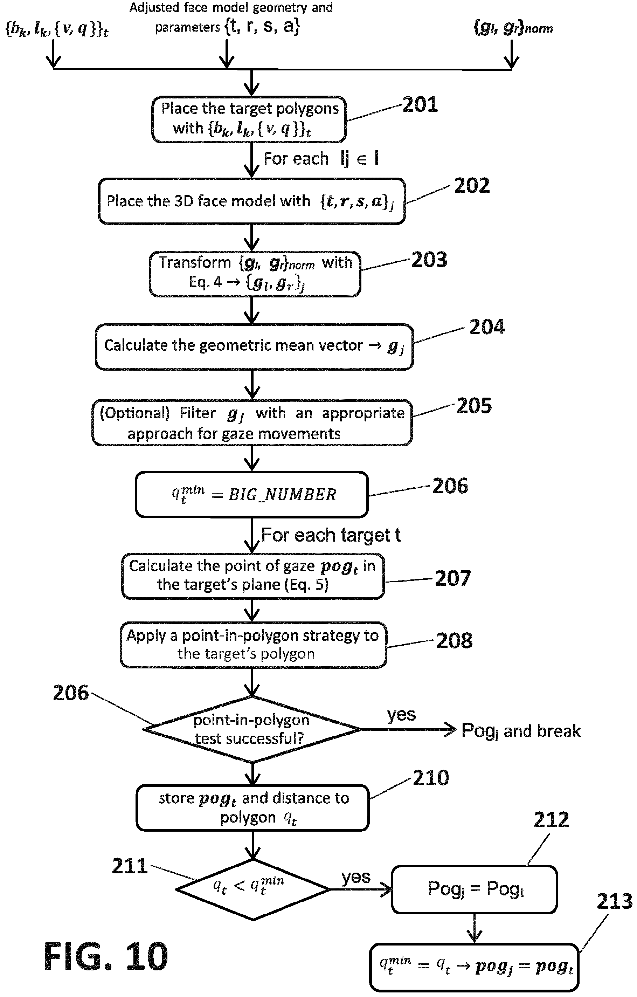

Figure 10 shows a flow chart of the algorithm corresponding to the third block 13 of the method of the invention (figure 1A). It is a target-related point of gaze estimation algorithm. It automatically infers the user's eye gaze with respect to the targets in the scene. The algorithm is as follows: First, the target geometries are placed with respect to the camera's coordinate system, which is the same reference used for the face and eye gaze vectors, already estimated in previous blocks of the method of the present disclosure. The camera's coordinate system has been previously pre-established. In other words, it is assumed that the camera's coordinate system is well-known. In the context of the present disclosure, a target is modelled or referred to as a set of polygons formed by *k* points *b* and lines *l*, and their corresponding planar surfaces {*v, q*} (where *v* is the normal vector and q the distance from the origin) that define the objects that need to be related with the user's point of gaze (e.g., a TV screen is represented by a rectangular plane, or the frontal and lateral windows in a vehicle are represented by 3 rectangular planes, etc., depending on the final application). Then, the 3D face model is placed in the scene with the parameters obtained in block 11 (figure 1A). Then, the normalized left and right eye 3D gaze vectors obtained in block 12 (figure 1A) are transformed, so that they are referred to the coordinate system of the camera (i.e., not to the normalized camera viewpoint, as before). This is done by removing the effect of the rotation angle θ that was used for the affine transformation applied to each normalized eye shape, like this:

$$\{g_l, g_r\} = \begin{cases} -\cos(\theta) \cdot (\{g_l, g_r\}_{norm})_x + \sin(\theta) \cdot (\{g_l, g_r\}_{norm})_y \\ -\sin(\theta) \cdot (\{g_l, g_r\}_{norm})_x - \cos(\theta) \cdot (\{g_l, g_r\}_{norm})_y \\ (\{g_l, g_r\}_{norm})_z \end{cases} \qquad (4)$$

Then, both gaze vectors are combined by calculating its geometric mean g, which it is assumed to be the user's overall gaze vector. The gaze vector may optionally be filtered by taking into account its frame-to-frame motion and an appropriate filtering method for eye movements. The origin of this vector is preferably placed in the middle position (mean value) of both eye centers from the 3D face, $\varepsilon$ (see for example the origin of this vector in the image in the left low corner in figure 1B). Thus, the point of gaze pog for each target plane can be estimated, like this:

$$pog_t = \varepsilon + \frac{(q - v \cdot \varepsilon)}{v \cdot g} \cdot g \qquad (5)$$

Finally, a point-in-polygon strategy is applied to see it any or the calculated *pog*-s lies within any of the polygons that represent the different targets. The polygon within which any of the calculated *pog*-s lies, is selected, or the closest one if none of the calculated *pog*-s lies within a polygon. Different point-in-polygon strategies are reported in E. Haines, "Point in Polygon Strategies." Graphics Gems IV, ed. Paul Heckbert, Academic Press, p. 24-46, 1994.

The algorithm of the flow chart of figure 10 can be written as follows:

---

**Algorithm 5:** Target-related point of gaze estimation algorithm

---

**Input:**

- *The set of polygons formed by k points b and lines l, plane normal vectors v and plane distances q with respect to the camera that represent the target objects* $\{b_k, l_k, \{v, q\}\}_t$

- *The adjusted face model geometry and parameters {t, r, s, a}, throughout I*

- *The user's normalized left and right eye gaze vectors estimation* $\{g_l, g_r\}_{norm}$, *throughout I*

**Output:** *The user's point of gaze with respect to the targets in the scene, throughout I*

---

1: Place the target polygons with $\{b_k, l_k, \{v, q\}\}_t$

1: **For each** $I_j \in I$ **do**

2:     Place the 3D face model with $\{t, r, s, a\}_j$

3:     Transform $\{g_l, g_r\}_{norm}$ with Eq. 4 $\rightarrow \{g_l, g_r\}_j$

4:     Calculate the geometric mean vector $\rightarrow g_j$

5:     (Optional) Filter $g_j$ with an appropriate approach for gaze movements

6:     $q_t^{min} = BIG\_NUMBER$

7:     **For each** target $t$ **do**

8:        Calculate the point of gaze $pog_t$ in the target's plane (Eq. 5)

9:        Apply a point-in-polygon strategy to the target's polygon

10:        **If** point-in-polygon test successful **then** $\rightarrow pog_j$ and **break**

11:        **Else** store $pog_t$ and distance to polygon $q_t$

12:        **If** $q_t < q_t^{min}$ **then** $\rightarrow pog_j = pog_t$

12:                    $q_t^{min} = q_t \rightarrow pog_j = pog_t$

12:            **end**

13:    **end**

14: **end**

As can be observed, the point-in-polygon strategy may result in that the point of gaze goes through a polygon, or that the point of gaze does not go through any polygon. In the event it does not, it may provide the closest distance to a polygon. In the method of the present disclosure, if the point of gaze does not go through a polygon, the method provides the closest polygon to the point of gaze. For example, in line 11 above, if the point of gaze does not go through a polygon, the distance to the polygon is stored. And in line 12 above, the current measured distance is compared to the minimum measured distance (which is the stored one), in order to guarantee that the closest polygon is finally selected.

One of the advantages of the computer-implemented method of the present invention is that it can be integrated, processed and executed in embedded hardware systems with low computational capabilities, such as mobile phones. Besides, in order to run the current method, no extra equipment is required apart from a single imaging device, such as several imaging devices or depth sensors. On the contrary, unlike current attempts for relating 2D image projections with a reconstructed 3D space, which require not only obtaining the person's 3D eye gaze vectors from the images, but also the person's 3D eye positions, the surrounding potential targets' geometries in the same 3D space, the camera characteristics from which that space is observed and an additional calibration stage done by the user. The current method only requires a single monocular imaging device that does not provide 3D data.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1.    A computer-implemented method for estimating eye point of gaze of a user, comprising:

fitting (11) a 3D face model (111) to a monocular image (101) of the user's face obtained from an imaging device, thus obtaining values of a set of face model parameters, said face model parameters being at least one model position parameter (t) representing a position of the 3D face model with respect to the imaging device, at least one orientation parameter (r) representing rotation angles of the 3D face model with respect to the imaging device, at least one user's face shape parameter (s) and at least one facial action parameter (a),
obtaining (12) normalized 3D gaze estimation vectors for right and left eyes (121) with respect to a coordinate system of the imaging device, the normalized 3D gaze estimation vectors being obtained as follows:

extracting and normalizing (113) a left-eye image patch and a right-eye image patch, as follows:

calculating (71) an affine transformation matrix for each eye, as follows:

$$\begin{bmatrix} \alpha & \beta & (1-\alpha)\cdot c_x - \beta \cdot c_y \\ -\beta & \alpha & \beta \cdot c_x + (1-\alpha)\cdot c_y \end{bmatrix}$$

wherein:
$\alpha = s \cdot \cos(\theta)$, $\beta = s \cdot \sin(8)$, $s = (w - 2 \cdot m_1)$, $\theta$ is an horizontal rotation angle of a line that connects both eye corners $e_1$, $e_2$, $\{c_x, c_y\}$ are image coordinates of the mean value between corners $e_1$, $e_2$, of an eye in the monocular image (101), w is a predefined width of an image patch and $m_1$ is half a difference between w and the line that connects both eye corners $e_1$, $e_2$;
applying (72) an eye shape normalization procedure for each eye to the monocular image (101) as follows: $I_{norm}^{shape}(x,y) = I_{input}(M_{11}x + M_{12}y + M_{13}, M_{21}x + M_{22}y + M_{23})$

wherein: $I_{input}$ is the monocular image (101), in $M_{rq}$, r denotes a row and q denotes a column of the affine transformation matrix for an eye, r being 1 or 2 and q being, 1, 2, or 3; and x,y represent coordinates of each pixel in the monocular image (101);

performing an eye image equalization to $I_{norm}^{shape}(x,y)$ for each eye to obtain a resulting matrix $I_{norm}$ for each eye;
mirroring (74) the resulting matrix $I_{norm}$ for the eye not corresponding to that considered for training of a regression model, wherein the regression model is a deep neural network trained with an annotated set of normalized eye images of one of the eyes only, in which the normalized eye images are annotated with corresponding normalized 3D eye gaze vector;

applying (115) the trained deep neural network to $I_{norm}$ and mirrored $I_{norm}$, thereby obtaining normalized 3D gaze estimation vectors for left and right eyes, {$g_l$, $g_r$}$norm$, as follows:

processing (75) $I_{norm}$ for one eye and mirrored $I_{norm}$ for the other eye with the trained deep neural network to obtain corresponding gaze vectors for left and right eyes;
un-mirroring (76) the gaze vector obtained in the previous step for the mirrored eye image, obtaining gaze vectors for left and right eyes, $\{g_l, g_r\}_{norm}^{regression}$;

applying (77) a head rotation's correction factor to the vectors $\{g_l, g_r\}_{norm}^{regression}$ to obtain corrected gaze vectors for left and right eyes, $\{g_l, g_r\}_{norm}^{corrected}$;

dividing (78) both corrected gaze vectors for left and right eyes, $\{g_l, g_r\}_{norm}^{corrected}$, by their corresponding Euclidean norms to thereby obtain both normalized 3D gaze estimation vectors for left and right eyes, {$g_l$, $g_r$}$norm$,

estimating (13) the eye point of gaze with respect to at least one target in a scene, as follows:

from each normalized 3D gaze estimation vector, at least one target's geometry (117) and camera intrinsic assumptions (116), modelling a virtual 3D space between the at least one target and the user, wherein the geometry of at least one target is modelled as a set of polygons and their corresponding planar surfaces;
placing the 3D face model in the scene with the set of face model parameters;
transforming the normalized 3D gaze estimation vectors for the right and left eyes, so that they are referred to the coordinate system of the imaging device;
calculating a geometric mean 3D eye gaze vector from said transformed normalized 3D gaze estimation vectors for the right and left eyes;
obtaining an intersection between the geometric mean 3D eye gaze vector and the geometry of the at least one target, said intersection being the estimated eye point of gaze with respect to a selected target.

2. The method of claim 1, wherein the 3D face model fitted to the monocular image is obtained as follows:

applying an appearance-based face region identification process (105-107) to the monocular image (101) for selecting a cropped face image (108);
applying an appearance-based face landmark detection algorithm (109) to the cropped face image (108) for extracting a set of facial characterization landmarks (d) representative of a shape of face elements, the face landmark detection algorithm (109) being fed with a trained face landmark detection model (110);
applying a model-based face model fitting algorithm (112) for fitting a 3D deformable face model (111) to the set of facial characterization landmarks (d), thus obtaining values of the set of face model parameters that minimize an error between each facial characterization landmark (d) and a corresponding projection in the 3D deformable face model (111).

3. The method of claim 2, wherein the 3D deformable face model (111) has 6 degrees of freedom corresponding to XYZ position coordinates and roll-pitch-yaw rotation angles with respect to the imaging device coordinate system.

4. The method of either claim 2 or 3, wherein the appearance-based face region identification process (105-107) comprises applying at least one of the following algorithms: a face detection algorithm (106) or a face tracking algorithm (107).

5. The method of any claims 2-4, said error is minimized by solving a non-linear optimization problem in which an objective function e is the minimum average distance between the detected facial landmarks (109) and their corresponding vertex counterparts in the deformable 3D face model (111), said objective function e being:

$$e = \arg \min \frac{1}{n} \sum_{j=1}^{n} [d_j - p(f, w, h, \boldsymbol{t}, \boldsymbol{r}, \boldsymbol{s}, \boldsymbol{a})_j]^2$$

where:

- $\boldsymbol{d_j} = \{d_1, d_2, d_3 ...\}$ are detected 2D landmark positions (109)
- $\boldsymbol{p} = \{p_1, p_2, p_3 ...\}$ are 2D projections of the corresponding model vertice,
- $f$ is a parameter indicating focal length of the imaging device from which the monocular image was obtained,
- $w$ is a parameter of the imaging device indicating image pixel width,
- $h$ is a parameter of the imaging device indicating image pixel height,
- $t = \{t_x, t_y, t_z\}$ are XYZ positions of the face model with respect to the camera,
- $\boldsymbol{r} = \{r_x, r_y, r_z\}$ are roll-pitch-yaw rotation angles of the face model with respect to the camera,
- $\boldsymbol{s} = \{s_1, s_2, s_3 ...\}$ are shape-related deformation parameters,
- $\boldsymbol{a} = \{a_1, a_2, a_3 ...\}$ are action-related deformation parameters,
- $n$ is the number of 2D landmark positions,
- $e$ is a residual error.

6. The method of claim 2, wherein applying an appearance-based face landmark detection algorithm (109) to the cropped face image (108) for extracting a set of facial characterization landmarks (d) representative of the shape of face elements, is done as follows:

holistically estimating (51) model position (t) and orientation (r) parameters,
holistically estimating (53) shape parameters (s), and
sequentially estimating (54) each action parameter (a).

7. The method of any preceding claim, wherein the imaging device from which the monocular image (101) is obtained is modelled at least by means of its focal length, its image pixel width and its image pixel height.

8. The method of claim 1, wherein obtaining the intersection between the geometric mean 3D eye gaze vector and the geometry of the at least one target, is done as follows:

calculating the point of gaze for each target plane,
applying a point-to-polygon strategy to select either a point of gaze that lies within any of the polygons that represent the at least one target or a point of gaze of the closest polygon.

9. The method of claim 1, wherein transforming the normalized 3D gaze estimation vectors for the right and left eyes (121) is done by removing the effect of the rotation angle $\theta$ that was used for the affine transformation applied to each normalized eye shape, like this:

$$\{g_l, g_r\} = \begin{Bmatrix} -\cos(\theta) \cdot (\{g_l, g_r\}_{norm})_x + \sin(\theta) \cdot (\{g_l, g_r\}_{norm})_y \\ -\sin(\theta) \cdot (\{g_l, g_r\}_{norm})_x - \cos(\theta) \cdot (\{g_l, g_r\}_{norm})_y \\ (\{g_l, g_r\}_{norm})_z \end{Bmatrix}$$

10. A system comprising at least one processor configured to perform the steps of the method according to any of the claims 1-9.

11. A computer program product comprising computer program instructions which, when the program is executed by a computer, cause the computer to carry out the method according to any of the claims 1-9.

12. A computer-readable storage medium comprising instructions which, when executed by a computer, cause the computer to carry out the method according to any of the claims 1-9.

**Patentansprüche**

1. Ein computerimplementiertes Verfahren zur Abschätzung des Blickpunkts eines Benutzers, wobei das Verfahren umfasst:

Anpassen (11) eines 3D-Gesichtsmodells (111) an ein monokulares Bild (101) des Gesichts des Benutzers, das von einer Abbildungseinrichtung erhalten wurde, wodurch Werte eines Satzes von Gesichtsmodellparametern erhalten werden, wobei die besagten Gesichtsmodellparameter mindestens ein Modellpositionsparameter (t), der eine Position des 3D-Gesichtsmodells in Bezug auf die Abbildungseinrichtung darstellt, mindestens ein Orientierungsparameter (r), der Drehwinkel des 3D-Gesichtsmodells in Bezug auf die Abbildungseinrichtung darstellt, mindestens ein Gesichtsformparameter (s) des Benutzers und mindestens ein Gesichtsaktionsparameter (a) sind,
Erhalten (12) normalisierter 3D-Blickschätzungsvektoren für das rechte und linke Auge (121) in Bezug auf ein Koordinatensystem der Abbildungseinrichtung, wobei die normalisierten 3D-Blickschätzungsvektoren wie folgt erhalten werden:

Extrahieren und Normalisieren (113) eines Bildfeldes für das linke Auge und eines Bildfeldes für das rechte Auge, wie folgt:

Berechnen (71) einer affinen Transformationsmatrix für jedes Auge, wie folgt:

$$\begin{bmatrix} \boldsymbol{\alpha} & \boldsymbol{\beta} & (1-\boldsymbol{\alpha}) \cdot \mathbf{c_x} - \boldsymbol{\beta} \cdot \mathbf{c_y} \\ -\boldsymbol{\beta} & \boldsymbol{\alpha} & \boldsymbol{\beta} \cdot \mathbf{c_x} + (1-\boldsymbol{\alpha}) \cdot \mathbf{c_y} \end{bmatrix}$$

wobei:
$\alpha$ = s · cos($\theta$) , $\beta$ = s · sin ($\theta$), s = (w - 2 · $m_1$), $\theta$ ist ein horizontaler Drehwinkel einer Linie, die beide Augenwinkel verbindet $e_1$, $e_2$, $\{c_x, c_y\}$ sind die Bildkoordinaten des Mittelwerts zwischen den Augenwinkeln $e_1$, $e_2$ eines Auges in dem monokularen Bild (101), w ist eine vordefinierte Breite eines Bildfeldes und $m_1$ ist die halbe Differenz zwischen w und der Linie, die beide Augenwinkel verbindet $e_1$, $e_2$;
Anwenden (72) eines Verfahrens zur Normalisierung der Augenform für jedes Auge auf das monokulare Bild (101), wie folgt:

$$I_{norm}^{shape}(x, y) = I_{input}(M_{11}x + M_{12}y + M_{13}, M_{21}x + M_{22}y + M_{23})$$

wobei: $I_{input}$ das monokulare Bild (101) in $M_{rq}$ ist, r eine Zeile und q eine Spalte der affinen Transformationsmatrix für ein Auge bezeichnet, wobei r 1 oder 2 ist und q 1, 2 oder 3 ist; und x, y Koordinaten jedes Pixels in dem monokularen Bild (101) darstellen;

Durchführen einer Augenbildentzerrung für $I_{norm}^{shape}(x, y)$ für jedes Auge, um eine resultierende Matrix $I_{norm}$ für jedes Auge zu erhalten;
Spiegeln (74) der sich ergebenden Matrix $I_{norm}$ für das Auge, das nicht demjenigen entspricht, das für das Training eines Regressionsmodells in Betracht gezogen wird, wobei das Regressionsmodell ein tiefes neuronales Netz ist, das mit einem kommentierten Satz von normalisierten Augenbildern von nur einem der Augen trainiert wurde, in welchem die normalisierten Augenbilder mit dem entsprechenden normalisierten 3D-Augenblickvektor kommentiert werden;

Anwenden (115) des trainierten tiefen neuronalen Netzes auf $I_{norm}$ und das gespiegelte $I_{norm}$, wodurch normalisierte 3D-Blickschätzungsvektoren für das linke und rechte Auge, $\{g_l, g_r\}norm,$ erhalten werden, wie folgt:

Verarbeiten (75) von $I_{norm}$ für ein Auge und von dem gespiegelten $I_{norm}$ für das andere Auge mit dem trainierten tiefen neuronalen Netz, um entsprechende Blickvektoren für das linke und rechte Auge zu erhalten;

Aufheben der Spiegelung (76) des in dem vorherigen Schritt für das gespiegelte Augenbild erhaltenen Blickvektors, um Blickvektoren für das linke und das rechte Auge, $\{g_l, g_r\}_{norm}^{regression}$, zu erhalten;

Anwenden (77) eines Korrekturfaktors für eine Kopfdrehung auf die Vektoren $\{g_l, g_r\}_{norm}^{regression}$, um

korrigierte Blickvektoren, $\{g_l, g_r\}_{norm}^{corrected}$, für linke und rechte Augen zu erhalten;

Dividieren (78) der beiden korrigierten Blickvektoren für linke und rechte Augen, $\{g_l, g_r\}_{norm}^{corrected}$, mit ihren entsprechenden euklidischen Normen, um so die beiden normalisierten 3D-Blickschätzungs-vektoren, $\{g_l, g_r\}norm$, für das linke und das rechte Auge zu erhalten,

Schätzen (13) des Blickpunkts der Augen in Bezug auf mindestens ein Ziel in einer Szene, wie folgt:

aus jedem normalisierten 3D-Blickschätzungsvektor, mindestens einer Geometrie eines Ziels (117) und Kamera-intrinsischen Annahmen (116), Modellieren eines virtuellen 3D-Raums zwischen dem mindestens einen Ziel und dem Benutzer, wobei die Geometrie mindestens eines Ziels als ein Satz von Polygonen und ihren entsprechenden ebenen Flächen modelliert wird;

Platzieren des 3D-Gesichtsmodells in die Szene mit dem Satz von Gesichtsmodellparametern;

Transformieren der normalisierten 3D-Blickschätzungsvektoren für das rechte und linke Auge, so dass diese auf das Koordinatensystem der Abbildungseinrichtung bezogen werden;

Berechnen eines geometrischen mittleren 3D-Blickvektors aus den transformierten normalisierten 3D-Blickschätzungsvektoren für das rechte und das linke Auge;

Ermitteln eines Schnittpunkts zwischen dem geometrischen mittleren 3D-Augenblicksvektor und der Geometrie des mindestens einen Ziels, wobei der besagte Schnittpunkt der geschätzte Augenblickpunkt in Bezug auf ein ausgewähltes Ziel ist.

2. Das Verfahren nach Anspruch 1, wobei das an das monokulare Bild angepasste 3D-Gesichtsmodell wie folgt erhalten wird:

Anwenden eines Erscheinungs-basierenden Prozesses zur Identifizierung von Gesichtsregionen (105-107) auf das monokulare Bild (101), um ein abgeschnittenes Gesichtsbild (108) auszuwählen;

Anwenden eines Erscheinungs-basierenden Algorithmus (109) zur Erkennung von Gesichtsmerkmalen auf das abgeschnittene Gesichtsbild (108), um einen Satz von Gesichtscharakterisierungsmerkmalen (d) zu extrahieren, die eine Form von Gesichtselementen darstellen, wobei dem Algorithmus (109) zur Erkennung von Gesichtsmerkmalen ein trainiertes Modell (110) zur Erkennung von Gesichtsmerkmalen zugeführt wird;

Anwenden eines modellbasierten Gesichtsmodellanpassungsalgorithmus (112) zum Anpassen eines verformbaren 3D-Gesichtsmodells (111) an den Satz von Gesichtscharakterisierungsmerkmalen (d), wodurch Werte des Satzes von Gesichtsmodellparametern erhalten werden, die einen Fehler zwischen jedem Gesichtscharakterisierungsmerkmal (d) und einer entsprechenden Projektion in dem verformbaren 3D-Gesichtsmodell (111) minimieren.

3. Das Verfahren nach Anspruch 2, wobei das verformbare 3D-Gesichtsmodell (111) 6 Freiheitsgrade hat, die zu XYZ-Positionskoordinaten und Roll-Nick-Gier-Drehwinkeln in Bezug auf das Koordinatensystem der Abbildungseinrichtung korrespondieren.

4. Das Verfahren nach Anspruch 2 oder 3, wobei der Erscheinungs-basierende Prozess zur Identifizierung von Gesichtsregionen (105-107) die Anwendung von mindestens einem der folgenden Algorithmen umfasst: einen Gesichtserkennungsalgorithmus (106) oder einen Gesichtsverfolgungsalgorithmus (107).

5. Das Verfahren nach einem der Ansprüche 2 bis 4, wobei der besagte Fehler durch Lösen eines nichtlinearen Optimierungsproblems minimiert wird, bei dem eine Zielfunktion e der minimale durchschnittliche Abstand zwischen den detektierten Gesichtsmerkmalen (109) und ihren entsprechenden Scheitelpunkt-Gegenstücken in dem verformbaren 3D-Gesichtsmodell (111) ist, wobei die Zielfunktion e ist:

$$e = \arg \min \frac{1}{n} \sum_{j=1}^{n} [d_j - p(f, w, h, \boldsymbol{t}, \boldsymbol{r}, \boldsymbol{s}, \boldsymbol{a})_j]^2$$

wobei:

- $\boldsymbol{d_j}$ = {$d_1$, $d_2$, $d_3$ ...} erkannte 2D-Positionen von Landmarken (109) sind,
- $p$= {$p_1$, $p_2$, $p_3$ ...} 2D-Projektionen der entsprechenden Modellscheitelpunkte sind
- $f$ ein Parameter ist, der die Brennweite der Abbildungseinrichtung angibt, mit der das monokulare Bild aufgenommen wurde,
- $w$ ein Parameter der Abbildungseinrichtung ist, der die Bildpixelbreite angibt,
- $h$ ein Parameter der Abbildungseinrichtung ist, der die Höhe der Bildpixel angibt,
- $t$= {$t_x$, $t_y$, $t_z$} XYZ-Positionen des Gesichtsmodells in Bezug auf die Kamera sind,
- $r$= {$r_x$, $r_y$, $r_z$} Roll-Nick-Gier-Drehwinkel des Gesichtsmodells in Bezug auf die Kamera sind,
- $\boldsymbol{s}$= {$s_1$, $s_2$, $s_3$ ...} Form-bezogene Verformungsparameter sind,
- $\boldsymbol{a}$= {$a_1$, $a_2$, $a_3$ ...} Aktions-bezogene Verformungsparameter sind,
- $n$ die Anzahl der 2D-Positionen von Landmarken ist,
- e ein Restfehler ist.

6. Das Verfahren nach Anspruch 2, wobei ein Erscheinungs-basierender Algorithmus (109) zur Erkennung von Gesichtsmerkmalen auf das abgeschnittene Gesichtsbild (108) angewendet wird, um einen Satz von Gesichtscharakterisierungsmerkmalen (d) zu extrahieren, die die Form von Gesichtselementen darstellen, wie folgt durchgeführt wird:

   ganzheitliches Schätzen (51) der Parameter für die Position (t) und die Ausrichtung (r) des Modells,
   ganzheitliches Schätzen (53) der Formparameter (s), und
   sequentielles Schätzen (54) jedes Aktionsparameters (a).

7. Das Verfahren nach einem der vorhergehenden Ansprüche, wobei die Abbildungseinrichtung, von der das monokulare Bild (101) erhalten wird, zumindest durch ihre Brennweite, ihre Bildpixelbreite und ihre Bildpixelhöhe modelliert wird.

8. Das Verfahren nach Anspruch 1, wobei der Schnittpunkt zwischen dem geometrischen Mittelwert des 3D-Augenblicksvektors und der Geometrie des mindestens einen Ziels wie folgt ermittelt wird:

   Berechnen des Blickpunkts für jede Zielebene,
   Anwenden einer Punkt-zu-Polygon-Strategie, um entweder einen Blickpunkt auszuwählen, der innerhalb eines der Polygone liegt, die das mindestens eine Ziel darstellen, oder einen Blickpunkt des nächstgelegenen Polygons.

9. Das Verfahren nach Anspruch 1, wobei die Transformation der normalisierten 3D-Blickschätzungsvektoren für das rechte und das linke Auge (121) durch Entfernen des Effekts des Drehwinkels θ erfolgt, der für die affine Transformation verwendet wurde, die auf jede normalisierte Augenform angewendet wird, wie folgt:

$$\{g_l, g_r\} = \begin{Bmatrix} -\cos(\theta) \cdot (\{g_l, g_r\}_{norm})_x + \sin(\theta) \cdot (\{g_l, g_r\}_{norm})_y \\ -\sin(\theta) \cdot (\{g_l, g_r\}_{norm})_x - \cos(\theta) \cdot (\{g_l, g_r\}_{norm})_y \\ (\{g_l, g_r\}_{norm})_z \end{Bmatrix}$$

10. Ein System mit mindestens einem Prozessor, der so konfiguriert ist, dass er die Schritte des Verfahrens nach einem der Ansprüche 1-9 durchführt.

11. Ein Computerprogrammprodukt, das Computerprogrammanweisungen enthält, die, wenn das Programm von einem Computer ausgeführt wird, den Computer veranlassen, das Verfahren nach einem der Ansprüche 1-9 auszuführen.

12. Ein computerlesbares Speichermedium, das Anweisungen enthält, die, wenn sie von einem Computer ausgeführt werden, den Computer veranlassen, das Verfahren nach einem der Ansprüche 1 bis 9 auszuführen.

**Revendications**

1. Méthode informatisée pour estimer le point de regard de l'oeil d'un utilisateur, comprenant :

l'ajustement (11) d'un modèle de visage 3D (111) à une image monoculaire (101) du visage de l'utilisateur obtenue à partir d'un dispositif d'imagerie, ce qui donne ainsi des valeurs d'un jeu de paramètres de modèle de visage, lesdits paramètres de modèle de visage étant au moins un paramètre de position de modèle (t) représentant une position du modèle de visage 3D par rapport au dispositif d'imagerie, au moins un paramètre d'orientation (r) représentant les angles de rotation du modèle de visage 3D par rapport au dispositif d'imagerie, au moins un paramètre de forme du visage de l'utilisateur (s) et au moins un paramètre d'action du visage (a), l'obtention (12) de vecteurs d'estimation de regard 3D normalisés pour les yeux droit et gauche (121) par rapport à un système de coordonnées du dispositif d'imagerie, les vecteurs d'estimation de regard 3D normalisés étant obtenus comme suit :

extraction et normalisation (113) d'une parcelle d'image de l'oeil gauche et d'une parcelle d'image de l'oeil droit, comme suit :

calcul (71) d'une matrice de transformation affine pour chaque oeil, comme suit :

$$\begin{bmatrix} \alpha & \beta & (1-\alpha) \cdot c_x - \beta \cdot c_y \\ -\beta & \alpha & \beta \cdot c_x + (1-\alpha) \cdot c_y \end{bmatrix}$$

dans laquelle :
$\alpha = s \cdot \cos(\theta)$, $\beta = s \cdot \sin(\theta)$, $s = (w - 2 \cdot m_1)$, $\theta$ est l'angle de rotation horizontale d'une ligne qui relie les deux coins de l'oeil $e_1$, $e_2$, $\{c_x, c_y\}$ sont des coordonnées d'image de la valeur moyenne entre les coins $e_1$, $e_2$ d'un oeil dans l'image monoculaire (101), w est une largeur prédéfinie d'une parcelle d'image et $m_1$ est la moitié de la différence entre w et la ligne qui relie les deux coins de l'oeil $e_1$, $e_2$ ;
application (72) à l'image monoculaire (101) d'une procédure de normalisation de forme d'oeil pour chaque oeil, comme suit :

$$I_{norm}^{shape}(x, y) = I_{input}(M_{11}x + M_{12}y + M_{13}, M_{21}x + M_{22}y + M_{23})$$

où $I_{input}$ est l'image monoculaire (101), dans $M_{rq}$, r désigne une rangée et q désigne une colonne de la matrice de transformation affine pour un oeil, r valant 1 ou 2 et q valant 1, 2 ou 3 ; et x, y représentent les coordonnées de chaque pixel dans l'image monoculaire (101) ;

mise en oeuvre d'une égalisation d'image de l'oeil à $I_{norm}^{shape}(x, y)$ pour chaque oeil afin que soit obtenue une matrice résultante $I_{norm}$ pour chaque oeil ;
mise en miroir (74) de la matrice résultante $I_{norm}$ pour l'oeil ne correspondant pas à celui considéré pour l'apprentissage d'un modèle de régression, lequel modèle de régression est un réseau neuronal profond entraîné avec un jeu annoté d'images d'oeil normalisées de l'un des yeux uniquement, et lesquelles images d'oeil normalisées sont annotées par le vecteur de regard de l'oeil 3D normalisé correspondant ;

application (115) du réseau neuronal profond entraîné à $I_{norm}$ et $I_{norm}$ mise en miroir, ce qui donne ainsi des vecteurs d'estimation de regard 3D normalisés pour les yeux gauche et droit, $\{g_t, g_r\}$ norm, comme suit :

traitement (75) de $I_{norm}$ pour un oeil et de $I_{norm}$ mise en miroir pour l'autre oeil avec le réseau neuronal profond entraîné pour que soient obtenus des vecteurs de regard correspondants pour les yeux gauche et droit ;
dé-mise en miroir (76) du vecteur de regard obtenu dans l'étape précédente pour l'image d'oeil mise en miroir, ce qui donne des vecteurs de regard pour les éux gauche et droit, $\{g_t, g_r\}_{norm}^{regression}$ ;

application (77) d'un facteur de correction de rotation de la tête aux vecteurs $\{g_t, g_r\}_{norm}^{regression}$ pour

que soient obtenus des vecteurs de regard corrigés pour les eux gauche et droit $\{g_t, g_r\}_{norm}^{corrected}$ ;

division (78) des deux vecteurs de regard corrigés pour les yeux gauche et droit, $\{g_t, g_r\}_{norm}^{corrected}$ , par leurs normes euclidiennes correspondantes pour que soient obtenus les deux vecteurs d'estimation de regard 3D normalisés pour les yeux gauche et droit, *{gt, g$_r$} norm,*

estimation (13) du point de regard d'un oeil par rapport à au moins une cible dans une scène, comme suit :

à partir de chaque vecteur d'estimation de regard 3D normalisé, au moins une géométrie de la cible (117) et de suppositions intrinsèques de la caméra (116), modélisation d'un espace 3D virtuel entre l'au moins une cible et l'utilisateur, dans laquelle la géométrie de la moins une cible est modélisée sous la forme d'un jeu de polygones et de leurs surfaces planes correspondantes ;
placement du modèle de visage 3D dans la scène avec le jeu de paramètres de modèle de visage ;
transformation des vecteurs d'estimation de regard 3D normalisés pour les yeux droit et gauche, de façon qu'ils soient adressés vers le système de coordonnées du dispositif d'imagerie ;
calcul d'un vecteur de regard d'oeil 3D moyen géométrique à partir desdits vecteurs d'estimation de regard 3D normalisés pour les yeux droit et gauche ;
obtention d'une intersection entre le vecteur de regard d'oeil 3D moyen géométrique et la géométrie de la au moins une cible, ladite intersection étant le point de regard de l'oeil estimé par rapport à une cible sélectionnée.

2. Méthode selon la revendication 1, dans laquelle le modèle de visage 3D ajusté à l'image monoculaire est obtenu comme suit :

application d'un procédé d'identification de région de visage basé sur l'apparence (105-107) à l'image monoculaire (101) pour sélectionner une image recadrée du visage (108) ;
application d'un algorithme de détection de repère de visage basé sur l'apparence (109) à l'image recadrée du visage (108) pour extraire un jeu de repères de caractérisation du visage (d) représentatif de la forme des éléments du visage, l'algorithme de détection de repère de visage (109) étant alimenté par un modèle de détection de repère de visage entraîné (110) ;
application d'un algorithme d'ajustement de modèle de visage basé sur un modèle (112) pour ajuster un modèle de visage déformable 3D (111) au jeu de repères de caractérisation du visage (d), ce qui donne ainsi des valeurs du jeu de paramètres de modèle de visage qui minimisent une erreur entre chaque repère de caractérisation du visage (d) et une projection correspondante dans le modèle de visage déformable 3D (111).

3. Méthode selon la revendication 2, dans laquelle le modèle de visage déformable 3D (111) a 6 degrés de liberté correspondant à des coordonnées de position XYZ et à des angles de rotation de roulis-tangage-lacet par rapport au système de coordonnées du dispositif d'imagerie.

4. Méthode selon l'une ou l'autre des revendications 2 et 3, dans laquelle le procédé d'identification de région de visage basé sur l'apparence (105-107) comprend l'application d'au moins un des algorithmes suivants : un algorithme de détection de visage (106) ou un algorithme de suivi de visage (107).

5. Méthode selon l'une quelconque des revendications 2 à 4, dans laquelle ladite erreur est minimisée par résolution d'un problème d'optimisation non linéaire dans lequel une fonction d'objectif e est la distance moyenne minimale entre les repères du visage détectés (109) et leurs contreparties de sommets correspondantes dans le modèle de visage 3D déformable (111), ladite fonction d'objectif e étant :

$$e = \arg \min \frac{1}{n} \sum_{j=1}^{n} [d_j - p(f, w, h, t, r, s, a)_j]^2$$

où :

• $d_j = \{d_1, d_2, d_3 ...\}$ sont les positions de repère 2D détectées (109),
• $p = \{p_1, p_2, p_3 ...\}$ sont les projections 2D des sommets du modèle correspondant,
• *f* est un paramètre indiquant la longueur focale du dispositif d'imagerie à partir duquel l'image monoculaire a été obtenue,

• w est un paramètre du dispositif d'imagerie indiquant la largeur de pixels d'image,
• *h* est un paramètre du dispositif d'imagerie indiquant la hauteur de pixels d'image,
• *t* = {$t_x$, $t_y$, $t_z$} sont les positions XYZ du modèle de visage par rapport à la caméra,
• *r* = {$r_x$, $r_y$, $r_z$} sont les angles de rotation de roulis-tangage-lacet du modèle de visage par rapport à la caméra,
• *s* = {$s_1$, $s_2$, $s_3$ ...} sont des paramètres de déformation associés à la forme,
• *α* = {$a_1$, $a_2$, $a_3$ ...} sont les paramètres de déformation associés à une action,
• *n* est le nombre de positions de repère 2D,
• *e* est une erreur résiduelle.

6. Méthode selon la revendication 2, dans laquelle l'application d'un algorithme de détection de repère du visage basé sur l'apparence (109) à l'image recadrée du visage (108) pour extraire un jeu de repères de caractérisation du visage (d) représentatif de la forme des éléments du visage, est effectuée comme suit :

   estimation holistique (51) des paramètres de position (*t*) et d'orientation (r) du modèle,
   estimation holistique (53) des paramètres de forme (s), et
   estimation séquentielle (54) de chaque paramètre d'action (*a*).

7. Méthode selon l'une quelconque des revendications précédentes, dans laquelle le dispositif d'imagerie à partir duquel l'image monoculaire (101) est obtenue est modélisé au moins au moyen de sa longueur focale, de sa largeur de pixels d'image et de sa hauteur de pixels d'image.

8. Méthode selon la revendication 1, dans laquelle l'obtention de l'intersection entre le vecteur de regard d'oeil 3D moyen géométrique et la géométrie de l'au moins une cible est effectuée comme suit :

   calcul du point de regard pour chaque plan de cible,
   application d'une stratégie de point-à-polygone pour sélectionner soit un point de regard qui se trouve dans n'importe lequel des polygones qui représentent la au moins une cible soit un point de regard du polygone le plus proche.

9. Méthode selon la revendication 1, dans laquelle la transformation des vecteurs d'estimation de regard 3D normalisés pour les yeux droit et gauche (121) est effectuée par élimination de l'effet de l'angle de rotation θ qui a été utilisé pour la transformation affine appliquée à chaque forme d'oeil normalisée, de la façon suivante :

$$\{g_l, g_r\} = \begin{Bmatrix} -\cos(\theta) \cdot (\{g_l, g_r\}_{norm})_x + \sin(\theta) \cdot (\{g_l, g_r\}_{norm})_y \\ -\sin(\theta) \cdot (\{g_l, g_r\}_{norm})_x - \cos(\theta) \cdot (\{g_l, g_r\}_{norm})_y \\ (\{g_l, g_r\}_{norm})_z \end{Bmatrix}$$

10. Système comprenant au moins un processeur configuré pour effectuer les étapes de la méthode selon l'une quelconque des revendications 1 à 9.

11. Programme informatique comprenant des instructions de programme informatique qui, lorsque le programme est exécuté par un ordinateur, amènent l'ordinateur à mettre en oeuvre la méthode selon l'une quelconque des revendications 1 à 9.

12. Support de stockage lisible par ordinateur comprenant des instructions qui, lorsqu'elles sont exécutées par un ordinateur, amènent l'ordinateur à mettre en oeuvre la méthode selon l'une quelconque des revendications 1 à 9.

**FIG. 1A**

FIG. 1B

**11** (Block 1)

Input monocular image(s) **101**

Trained face detection model **105**

Face detection **106**

Face tracking **107**

Identified face region

Trained face landmark detection model **110**

Face landmark detector **109**

$d=\{d_1, d_2, d_3 \ldots\}$

Generic 3D face deformable model **111**

Adjust 3D face model to detected face landmarks **112**

$\{t, r, s, a\}$

# FIG. 2

FIG. 3

**101**
Image sequence

**41**
Face detection needed?

no

**42**
Reset the face model parameters to neutral configuration

yes

**45**
Locate stored face image patch in the image

**43**
Run the face region detector in the image

**46**
Located face region contains a real face?

yes

**44**
Store detected user's face image patch and face region

**47**
Store the located face region

**48**
Face region available?

yes

**49**
Run the face landmark detector in the face region

**50**
Adjust the 3D face model to the detected landmarks

# FIG. 4

## Adjustment of 3D face model to detected face landmarks

Set of 2D landmark position d in the image

Relation list between landmark and vertices

Camera parameters

Set the deformation parameters {s, a} to zero — **51**

Convert the current parameter values to the normalized range workspace — **52**

Optimize Eq. 1 with {s} as the only variables — **53**

For each $a_k \in a$, optimize Eq. 1 with $\{a_k\}$ as the only variable — **54**

# FIG. 5

FIG. 6

Image
sequence Ij

Values of Face model
parameters {t, r, s, a}

2D left and right eye
corner landmark
positions, throughout I

Pre-trained deep neural
network for regressing 3D
gazes from normalized
eye images

Calculate affine transformation
matrix M for each eye **71**

Obtain the normalized shape of the
image for each eye$_{Inorm}$$^{shape}$ **72**

Equalize the shape-normalized
image for each eye$_{Inorm}$ **73**

Mirror$_{Inorm}$ for the eye not corresponding to
the eye considered by the regressor (left or right) **74**

Process both$_{Inorm}$ (left and right) with the
pre-trained deep neural network **75**

Un-mirror the response for the mirrored
eye image **76**

Apply the head rotation's correction factor **77**

Divide both regression results by their
corresponding Euclidean norms **78**

normalized 3D gaze vectors
**121**

# FIG. 7

# FIG. 8

shape-normalized eye image $I_{norm}^{shape}$

Calculate the histogram $H$ of $I_{norm}^{shape}$ — 91

Normalize the histogram — 92

Compute the integral of the histogram: $H_i' = \sum_{0 \le j < i} H(j)$ — 93

Transform the image: $I_{norm}(x, y) = H'(I_{norm}^{shape}(x, y))$ — 94

# FIG. 9

$\{b_k, l_k, \{v, q\}\}_t$     Adjusted face model geometry and
parameters $\{t, r, s, a\}$     $\{g_l, g_r\}_{norm}$

Place the target polygons
with $\{b_k, l_k, \{v, q\}\}_t$ — **201**

For each $lj \in l$

Place the 3D face model with $\{t, r, s, a\}_j$ — **202**

Transform $\{g_l, g_r\}_{norm}$ with
Eq. 4 → $\{g_l, g_r\}_j$ — **203**

Calculate the geometric mean vector → $g_j$ — **204**

(Optional) Filter $g_j$ with an appropriate
approach for gaze movements — **205**

$q_t^{min} = BIG\_NUMBER$ — **206**

For each target t

Calculate the point of gaze $pog_t$ in
the target's plane (Eq. 5) — **207**

Apply a point-in-polygon strategy to
the target's polygon — **208**

**206** — point-in-polygon
test successful? — yes → Pog$_j$ and break

store $pog_t$ and distance to
polygon $q_t$ — **210**

**211** — $q_t < q_t^{min}$ — yes → Pog$_j$ = Pog$_t$ — **212**

$q_t^{min} = q_t → pog_j = pog_t$ — **213**

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Geometric Eye Gaze Tracking. **STRUPCZEWSKI A. et al.** Proc. of the Conference on Computer Vision, Imaging and Computer Graphics Theory and Applications (VISIGRAPP). VISAPP, 2016, vol. 3, 446-457
- **UNZUETA L. et al.** Efficient generic face model fitting to images and videos. *Image and Vision Computing*, 01 May 2014, vol. 32 (5), 321-334
- **ZHANG X. et al.** Appearance-Based Gaze Estimation in the Wild.. *Proc. of the IEEE International Conference on Computer Vision and Pattern Recognition (CVPR)*, 2015, 4511-4520
- **KRAFKA K. et al.** Eye Tracking for Everyone.. *Proc. of the IEEE Conference on Computer Vision and Pattern Recognition (CVPR)*, 2016
- **ZHANG X. et al.** It's Written All Over Your Face: Full-Face Appearance-Based Gaze Estimation.. *CoRR abs/1611.08860*, 2017
- **WOOD et al.** Rendering of Eyes for Eye-Shape Registration and Gaze Estimation. *Proc. of the IEEE International Conference on Computer Vision (ICCV)*, 2015
- **WOOD et al.** Learning an Appearance-Based Gaze Estimator from One Million Synthesised Images.. *Proc. of the ACM Symposium on Eye Tracking Research & Applications*, 2016, 131-138
- **SHRIVASTAVA et al.** Learning from Simulated and Unsupervised Images through Adversarial Training. *CoRR abs/1612.07828*, 2016
- **ZHANG et al.** MPIIGaze: Real-World Dataset and Deep Apperance-Based Gaze Estimation. Cornell University Library, 24 November 2017

- **LEVENBERG**. A Method for the Solution of Certain Non-Linear Problems in Least Squares.. *Quarterly of Applied Mathematics*, 1944, vol. 2, 164-168
- **MARQUARDT**. An Algorithm for Least-Squares Estimation of Nonlinear Parameters. *SIAM Journal on Applied Mathematics*, 1963, vol. 11 (2), 431-441
- **BROYDEN**. The Convergence of a Class of Double Rank Minimization Algorithms: 2. The New algorithm.. *J. Inst. Math. Appl.*, 1970, vol. 6, 222-231
- **FLETCHER**. A New Approach to Variable Metric Algorithms.. *Computer J.*, 1970, vol. 13, 317-322
- **GOLDFARB**. A Family of Variable Metric Methods Derived by Variational Means.. *Math. Comp.*, 1970, vol. 24, 23-26
- **SHANNO**. Conditioning of Quasi-Newton Methods for Function Minimization. *Math. Comp.*, 1970, vol. 24, 647-650
- **LECUN**. Gradient-Based Learning Applied to Document Recognition. *Proceedings of the IEEE*, 1998
- **SIMONYAN** ; **ZISSERMAN**. Very Deep Convolutional Networks for Large-Scale Image Recognition.. *CoRR abs/1409.1556*, 2014
- Point in Polygon Strategies.. **E. HAINES** ; **PAUL HECKBERT**. Graphics Gems. Academic Press, 1994, vol. 4, 24-46